# EUROPEAN PATENT SPECIFICATION

(11) **EP 2 134 183 B1**
(45) Date of publication and mention of the grant of the patent: **09.04.2014**
(21) Application number: 08730514.0
(22) Date of filing: 22.02.2008
(51) Int. Cl.: A21D 8/02, A21C 11/00, A21D 13/00

(54) **AUTOMATED PIZZA PREPARATION AND VENDING SYSTEM**
AUTOMATISIERTES PIZZAZUBEREITUNGS- UND VERKAUFSYSTEM
SYSTÈME DE PRÉPARATION ET DE DISTRIBUTION AUTOMATIQUES DE PIZZA

(30) Priority: 22.02.2007 US 891218 P
(43) Date of publication of application: 23.12.2009
(73) Proprietor: K&G Enterprises, Llc, New York, NY 10018 (US)
(72) Inventor: KHATCHADOURIAN, Puzant, New York, NY 10017 (US); KOUYOUMDJIAN, Krikor, New York, NY 10018 (US); BRINI, Bernardo, New York, NY 10018 (US); PAPAKHIAN, Daniel, New York, NY 10018 (US); SCURTU, Dragosh, New York, NY 10018 (US); KAZARIAN, Aram, New York, NY 10018 (US); CARBONE, Philip, New York, NY 10018 (US); PESCATORE, Peter, New York, NY 10018 (US); BREKKEN, Matthew, New York, NY 10018 (US); KING, Darrell, New York, NY 10018 (US); MCKENNEY, Kyle, New York, NY 10018 (US); ELLIS, Warren, New York, NY 10018 (US)
(74) Representative: Lucas, Laurent Jacques
(86) International application number: PCT/US2008/054723
(87) International publication number: WO 2008/103907

(56) References cited:
- US-A- 3 273 300
- US-A- 3 273 300
- US-A- 4 252 055
- US-A- 4 737 092
- US-A- 5 121 677
- US-A- 5 921 170
- US-A- 5 921 170
- US-A- 5 997 924
- US-A1- 2001 024 671
- US-A1- 2002 088 206
- US-A1- 2002 176 921
- US-B2- 6 546 847

## Description

### Field of the Invention

The present invention generally relates to the field of food preparation and vending systems. More specifically, the present invention relates to an automated system for preparing and vending individual pizzas for consumption.

### Background of the Invention

Pizza is a very popular food in many countries throughout the world. Although pizza is a relatively simple food, having generally just three ingredients in its most basic form-dough, tomato sauce and cheese, there are many variations in the taste and quality of the finished, cooked pizza. There are also a number of ways of preparing and cooking pizza. The most common and typical method of preparation and cooking is what is referred to as "fresh" pizza. This method generally involves the flattening of the dough, placement of the sauce and cheese on the dough, and subsequent cooking in an oven. Once removed from the oven, the "fresh" pizza is consumed while it is still hot or warm.

The popularity of pizza has led to many different methods of preparation and cooking in order to provide pizza to consumers in many different forms, such that it is available to be consumed in virtually any place. The typical method of preparation and cooking, as outlined above, is generally performed in a pizza parlor, or in an individual's home, where the ingredients, as well as an oven are available. The pizza is then consumed at the pizza parlor, or at the home, whichever is more convenient. However, this typical method of preparation and cooking requires one to have the necessary ingredients available, and to also have an oven available for use. These requirements restrict the availability of "fresh" pizza.

Several approaches have been developed to address these requirements of pizza preparation, i.e., the requirement for the necessary ingredients, and the requirement for the oven. One such approach involves the use of frozen pizzas. This approach eliminates the requirement for having the necessary ingredients on hand. Instead, the prepared, frozen pizza, which can be purchased at a store ahead of time and stored in one's freezer, can then be cooked in one's oven at any convenient and desirable time. However, the use of frozen pizzas still requires one to have access to an oven. Also, the resulting pizza is sometimes not of the same taste quality as "fresh" pizza, i.e., where the ingredients are assembled together and then cooked right away.

Another approach which has been developed in order to make pizza more readily available in more places, is the use of vending systems or vending machines. These machines typically use prestored, frozen pizza which are then cooked in an oven within the vending machine and then dispensed to a customer. This approach eliminates the need for having the necessary ingredients and for having an oven available. However, such vending machines typically use frozen pizza as the starting point. As a consequence, the resulting pizza produced by such a machine is not really considered "fresh" pizza, nor does its resemble that of "fresh" pizza.

Yet another approach to preparing pizza by way of vending machines is the use of fresh ingredients in order to better provide what is considered a "fresh" pizza. Such machines are disclosed in, for example, U.S. Patent Nos. 5,921,170, 6,086,934, US5997924, US 2004/024671, US 2002/176921 and US 3273300.

### Summary of the Invention

The present invention is directed to an apparatus as in claim 1 for preparing and cooking pizza using fresh ingredients, the apparatus being in the form of a vending type of machine. By way of a keypad, touchpad, display or other user interface provided on the machine, a user specifies the type of pizza that they want. The machine then proceeds to combine the ingredients needed to create the requested pizza, cooks the pizza, as appropriate, places it in a box, and dispenses the boxed pizza to the user or customer.

Generally, the pizza preparation machine (also referred to as the pizza making apparatus or machine) is provided with fresh ingredients in various types of appropriate containers. For example, the dough may be provided in the form of sealed canisters or tubes, which are opened in an automated fashion. Slices of dough may be cut from the dough canisters for each pizza which is to be made. Sauce may be provided in the form of sealed tubes, bags, or containers, whereby a controlled amount of the sauce may be dispensed by way of a controlled dispensing system, such as a pump or similar mechanism. Finally, the cheese may be provided in a bag or other container, whereby a measured amount of cheese may be dispensed and provided on each pizza as it is prepared.

The pizza preparation machine may also include a refrigerated section for maintaining ingredients which need to be refrigerated at an appropriate temperature in order to maintain the freshness of such ingredients, as well as to maintain a proper sanitary and food handling environment.

The pizza preparation machine also includes an oven section where the pizza is cooked. Additionally, the pizza preparation machine may also include a box formation section where a box may be formed for the pizza to be placed inside the box. For example, the pizza preparation machine may be provided with a stack of box blanks, i.e., folded boxes, such that the box formation section retrieves an individual box blank and folds it as appropriate in order to create a three-dimensional box. The pizza which has been cooked by the oven can then be inserted inside the formed box. The formed box may then be closed, and then dispenses to the user or customer by way of an opening in the pizza preparation machine.

The pizza making apparatus may also include appropriate controlled movement mechanisms employing controlled motors or other drivers for moving various elements within the machine in order to create the pizza and then transfer the pizza through the various sections within the machine. For example, such mechanisms may include a controlled knife for cutting a specific piece of dough, horizontal and vertical transfer mechanisms for moving the cut dough to the various sections of the machine, as well as controlled movement mechanisms for dispensing the ingredients or toppings in a specified amount and in a specified location. Additionally, sensors may be positioned in specified locations within the machine to indicate the presence or absence of particular events in order to facilitate the pizza making process. For example, sensors may be used to indicate the movement of the dough to a sufficient position to thereby indicate a predetermined thickness of dough which is to be cut by the knife. Such sensors and controlled movement mechanisms may be operated in conjunction with a programmed processor or other electronic controller device.

### Description of the Drawings

The above and still further objects, features and advantages of the present invention will become apparent upon consideration of the following detailed description of a specific embodiment thereof, especially when taken in conjunction with the accompanying drawings wherein like reference numerals in the various figures are utilized to designate like components, and wherein:
FIG. **1** is a front perspective view of the pizza making apparatus according to one embodiment of the present invention;
FIG. **2** is a front view of the pizza making apparatus of FIG. 1;
FIG. **3** is a perspective view of the canister handling and dough portioning system of the pizza making apparatus;
FIG. **4** is a left perspective view of the canister handling and dough portioning system of the pizza making apparatus;
FIG. **5A** is a front cross sectional view of the canister lid removal system, with the canister about to enter the lid removal clamp;
FIG. **5B** is a front cross sectional view of the canister lid removal system, with the canister pushed through lid removal clamp;
FIG. **5C** is a front cross sectional view of the canister lid removal system canister retracted back out of the clamp, with the lid removed;
FIG. **6A** is a right perspective view of the canister lid removal system with the lid about to be removed;
FIG. **6B** is a right perspective view of the canister lid removal system with the removed lid being kicked into the lid container;
FIG. **7** is a cross sectional view of the lid removal and dough portioning system, with the canister into the dough knife hub and a portion of dough being cut;
FIG. **8A** is a front right perspective view of the canister handling and dough portioning system, as well as the dough pressing and par-baking system, with a newly cut piece of dough;
FIG. **8B** is a front right perspective view of the canister handling and dough portioning system with the newly cut piece of dough being lowered out of the refrigerated area;
FIG. **8C** is a perspective view of the dough pressing system with the newly cut piece of dough about to be transferred to the hot press platform;
FIG. **8D** is a perspective view of the dough pressing system with the dough portion just having been transferred to the hot press platform;
FIG. **8E** is a perspective view of the dough pressing system with the press platform under the top press plate;
FIG. **8F** is a perspective view of the dough pressing system with the pushing arm in the retracted position;
FIGs. **9A** to **9I** are front cross sectional views of the hot press and par-baking system depicting various stages of the pressing process;
FIG. **10A** is a front right perspective view of the dough pressing system and the pie topping area, showing the newly made pie crust being transferred to the topping area;
FIG. **10B** is a front right perspective view of the pie topping area, showing the sauce spreading process;
FIG. **11A** is a front left perspective view of the pie topping area showing the cheese dispensing mechanism;
FIG. **11B** is a front right perspective view of the cheese dispensing mechanism with the cheese canister and the canister base removed to depict the bag insertion process;
FIG. **11C** is a front exploded view of the cheese dispensing mechanism;
FIGs. **11D** and **E** are front left perspective views of the pie topping area showing the cheese dispensing and spreading process;
FIGs. **12A** to **12C** are front right perspective views of the pie oven transfer system;
FIG. **13A** is a rear sectional view of the conveyor oven;
FIG. **13B** is a rear perspective view of the oven and the packaging system showing the pizza about to be transferred to a box;
FIG. **14A** is a front view of the box forming system;
FIGs. **14B** to **14D** are front right perspective views of the box forming system, depicting the box separation and opening sequence;
FIGs. **15A** to **G** are left side views of the rear flap folding mechanism, depicting various stages of the box flap closing process;
FIG. **16** is a block diagram of a first embodiment of an electronic control system for the present invention;
FIG. **17** is a block diagram of an alternative embodiment of an electronic control system for the present invention; and
FIG. **18** is a flowchart of the process performed by the present invention to prepare a pizza.

### Detailed Description of the Invention

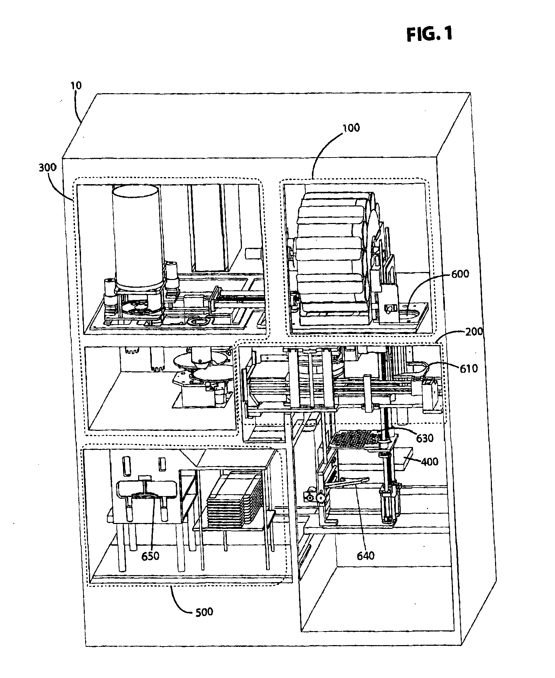

Referring now to FIG. **1****,** an apparatus **10** for making pizza is illustrated. The apparatus includes a dough-storage and handling area **100,** a dough pressing and par-baking area **200,** a topping storage and dispensing area **300,** an oven **450,** and a packaging area **500.** The apparatus also includes mechanisms that serve to transfer the pizza between these areas. These transfer mechanisms include the dough slice elevator **600,** the plate transfer arm **610,** the elevator transfer arm **620,** the pizza elevator **630,** the oven transfer arm **640,** and the box transfer arm **650** (not visible in FIG. **1**).

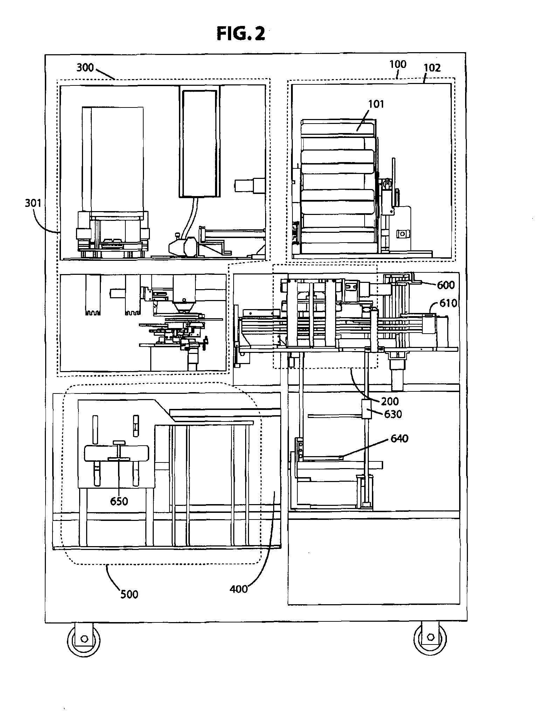

Referring now to FIG. **2****,** the dough storage and handling system **101** is enclosed in a refrigerated compartment **102,** which is kept at a temperature which is preferably between 18° and 24° F, and the topping storage and dispensing area **300** is enclosed in a refrigerated compartment **301,** which is kept at a temperature which is preferably between 34° and 40° F.

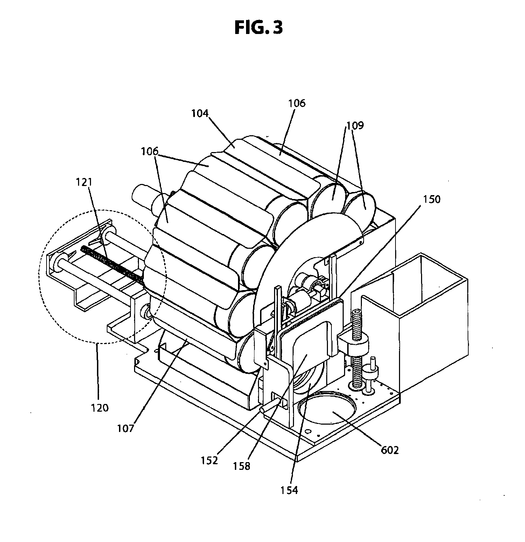

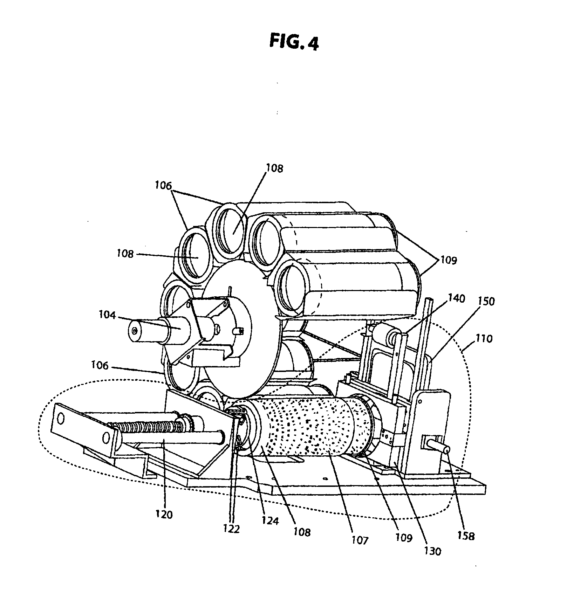

Referring now to FIGs. **3-4****,** the dough storage area includes a canister Ferris wheel **104** that houses a plurality of canisters **106.** Each canister **106** is filled with dough and is sealed at its rear with a moving piston **108** and at its front with a lid **109.** Each canister preferably has an internal diameter of four inches and is approximately ten inches in axial length. Alternatively, the internal diameter may be as much as five inches or more and the axial length may vary from eight to twelve inches. Of course, other configurations may be used depending on the particular application.

The canisters **106** are stored within Ferris wheel-like mechanism **104,** which rotates to present each canister to the dough cutting station **110.** The canister received in the dough cutting station will be referred to as canister **107.** The dough cutting station assembly **110** includes an extruder mechanism **120,** a lid removal clamp **130,** a lid kicker mechanism **140** and a dough-cutting mechanism **150.** When the canister Ferris wheel mechanism **104** introduces the canister **107** to the cutting station, the canister is centered axially with extruder **120,** lid remover **130** and dough cutter **150** mechanisms.

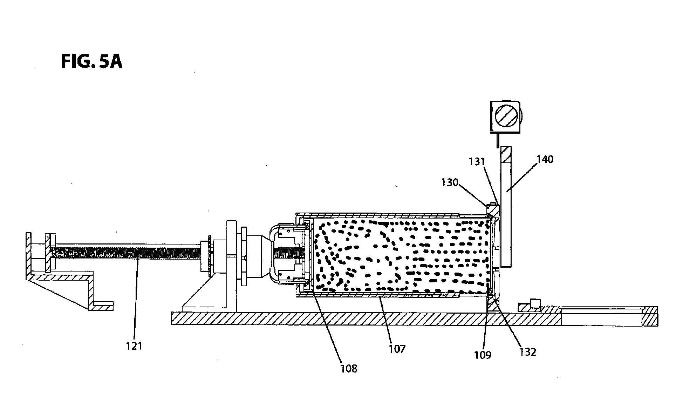

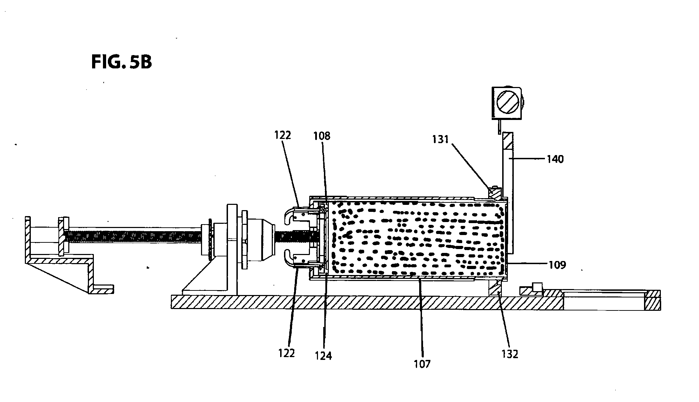

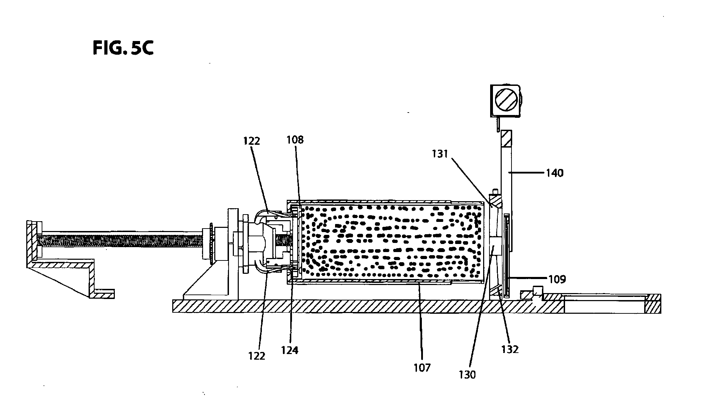

Referring now to FIGs. **5A-5C****,** the canister lid removal process will now be described. First, the extruder mechanism pushing shaft **121** advances, bringing the extruder pusher plate **124** into contact with the internal piston **108** of the canister **107** to eventually push the front face of the latter beyond the lid removal clamp **130.** The canister lid removal clamp includes two spring loaded semicircular blocks, **131** and **132,** arranged vertically one on top of the other, such that when the canister is pushed against them from the left, they are deflected up and down, respectively, to allow the canister to pass through. In an alternative embodiment, one of the blocks may be fixed, with the other block being spring loaded so that it can deflect up and down with respect to the fixed block. Referring to FIG. **5B****,** when the lid **109** clears these blocks, they retract back onto the canister body. Upon the initial contact of the extruder pusher plate **124** with the internal piston **108** of the canister, a set of three spring loaded hooks **122** arranged along the perimeter of the extruder pusher plate **124** are deployed and act to engage the back end of the canister to permit the extruder to pull the canister back out of the lid removal clamp.

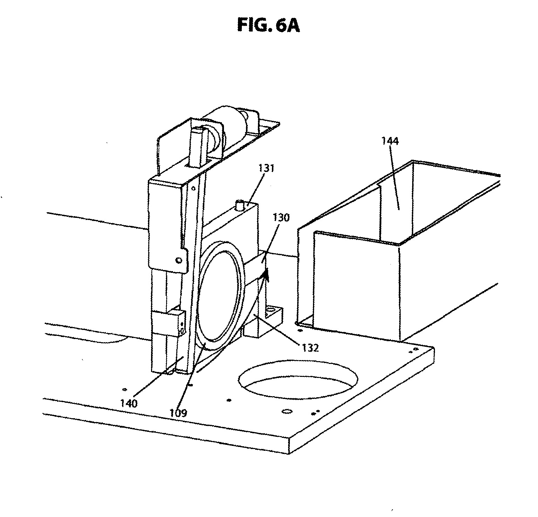

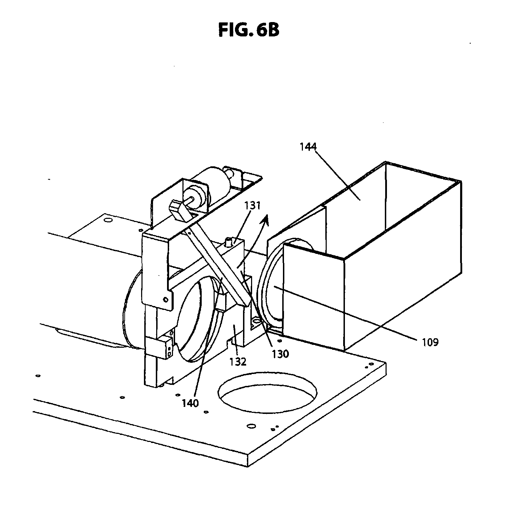

As the canister retracts back out of the lid removal clamp **130,** the lid **109** is pushed off the canister as it is prevented from retracting by the lid removal clamp. Referring now to FIG. **6A****,** the lid **109** is moved out from in front of the canister by a kicker mechanism **140** that knocks the lid into a receptacle **144** in the rear of the canister area. In an alternative embodiment, the lid receptacle may have an upward slope at its entrance, such that once the lids are pushed in they can no longer come back out. Optionally, a photosensor may be used to detect whether or not the lid has properly been moved out.

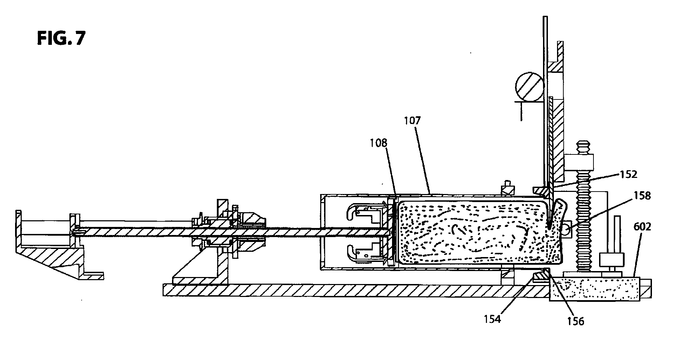

Referring now to FIG. 7, after the canister is opened, the extruder now pushes the canister into the dough cutting hub **154** and against a lip **156** at the edge of the dough cutting hub. The canister is now ready to extrude dough slices when an order is placed. Upon the reception of an order for a pizza, the dough cutting blade **152** is raised. This opens the way for the extruder to push dough out of the canister and through the cutting hub **154.** In this case, the canister itself is prevented from advancing by the lip **156,** such that the pressure generated on the piston **108** eventually disconnects the dough from the canister wall and pushes it through the dough cutting hub **154.** As the dough advances, it is eventually detected by an electronic photosensor **158,** which stops the extruder from pushing once the dough has been pushed a predetermined amount, i.e., when a predetermined thickness of dough has been pushed out of the dough canister. The position of the photosensor essentially determines the thickness of the dough slice. The dough cutting blade **152** now descends and cuts the dough to thereby create a dough slice. The newly cut slice falls onto an elevator surface **602,** which lowers the slice out through the refrigerated area down to the level of the press mechanism.

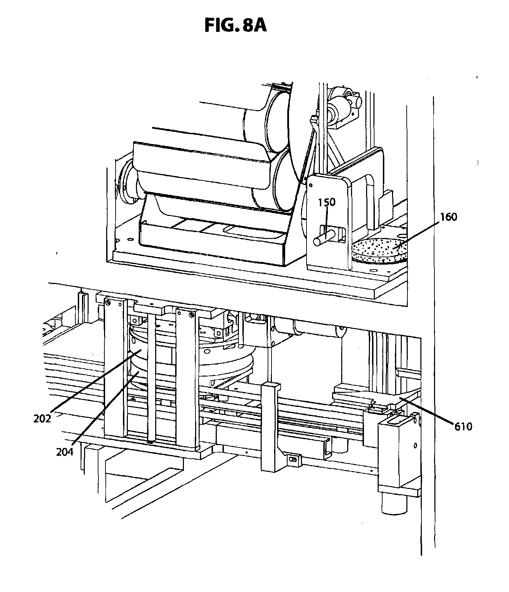

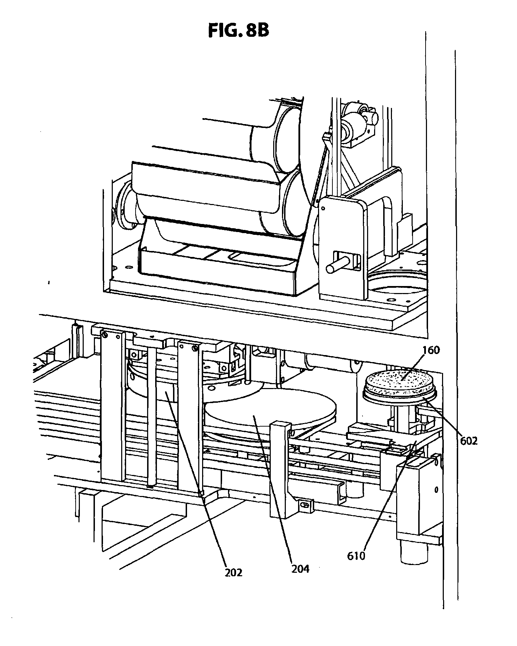

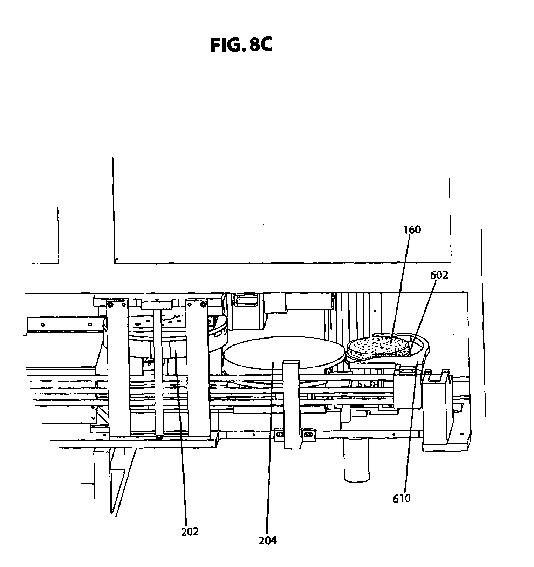

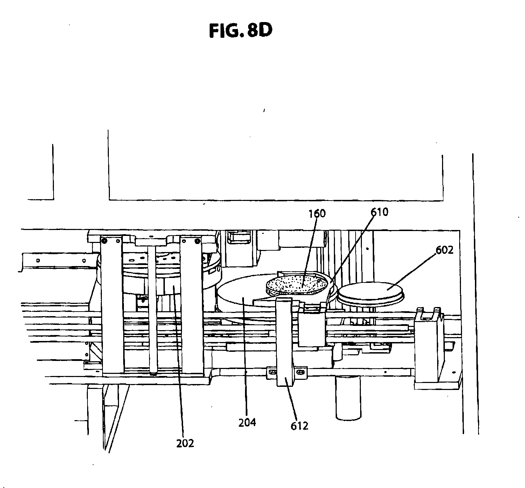

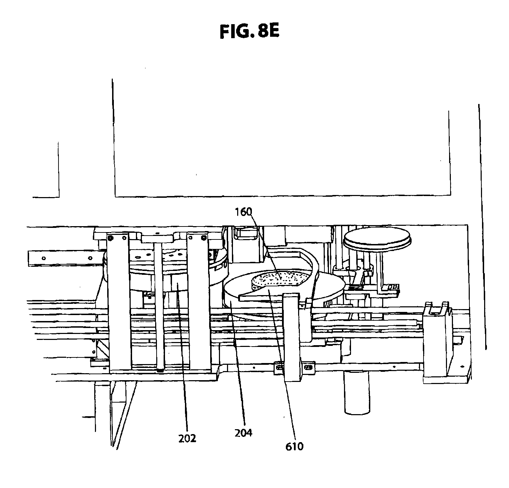

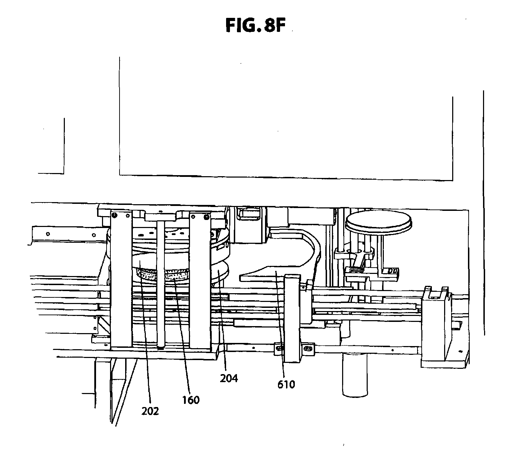

Referring now to FIGs. **8A-F****,** the dough puck or dough slice transfer to the press mechanism will be discussed. The press area includes a circular heated press top plate **202** that moves vertically from an uppermost position to a lowermost position, a circular heated lower press plate **204** that moves along the horizontal axis from a leftmost position to a rightmost position, and a pushing arm **610** that moves along the horizontal axis. The newly cut slice or piece of dough will be referred to as the dough puck **160.** Upon reception of an order for a pizza, the press top plate **202** will move to its uppermost position, the press lower plate **204** will move to its rightmost position, where it will be adjacent to the dough slice elevator surface **602** when the latter is lowered with the freshly cut piece of dough. In an alternative embodiment, the lower press plate **204** may be fixed, and the top press **202** plate may then move with respect to the lower press plate **204.** The plate transfer arm **610** now moves the slice of dough onto the lower press plate **204.** Referring now to FIG. **8D****,** as the slice approaches the center of the bottom press plate, the arm **610** is deflected up when it contacts the plate transfer arm deflector **612.** The sudden upward movement caused by this deflection severs the contact between the pusher arm **610** and the slice of dough. This insures that the dough slice remains centered as the lower press plate moves back to position itself under the top press plate **202.** The dough puck **160** is now in position to be pressed.

In order to achieve fast and consistent results in producing pie crusts that are rigid enough to be pushed around to the various stations in the machine while maintaining a certain amount of lightness and airiness expected of pie crusts, the pressure buildup between the two plates must be controlled in order to prevent blowouts, deformities of the pie crusts, or crusts with bad texture. Excessive pressure can be caused by many factors such as variances of dough portion sizes, dough temperature, press temperature, differences of temperature between top and bottom plates, and even variances in the positioning of the dough. There must however be a certain amount of tolerance to allow for normal fluctuations for each of these factors. The goal is to press out the dough into pie crusts of consistent thickness. This is achieved through the press design and a particular pressing sequence, as described herein.

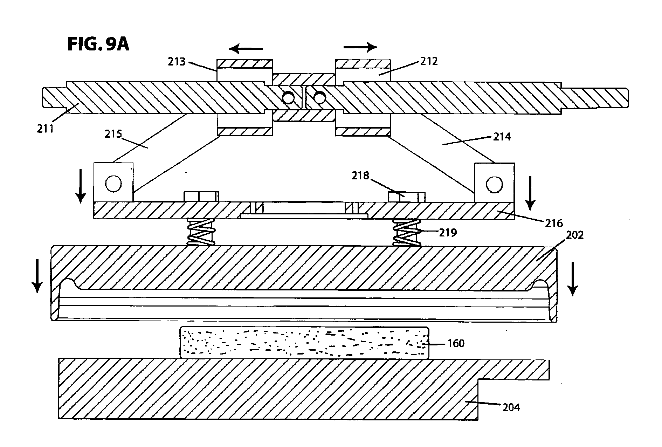

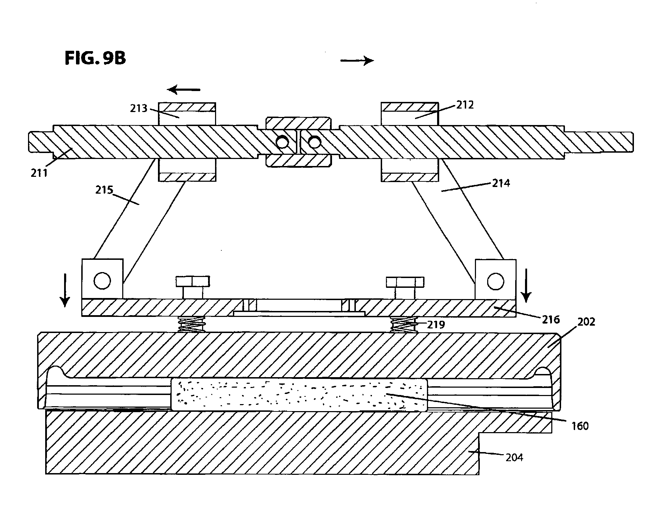

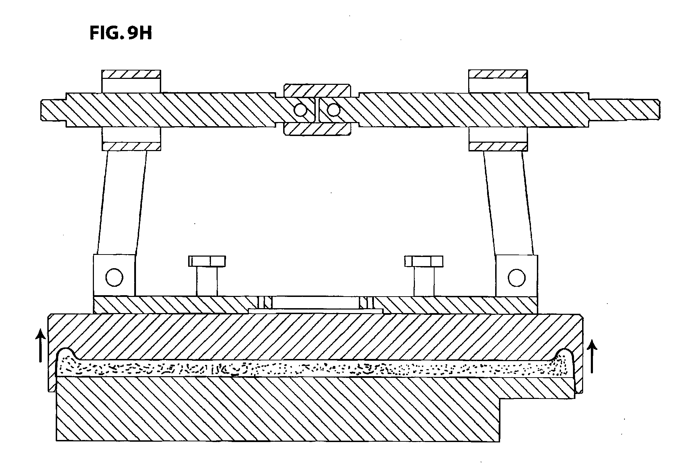

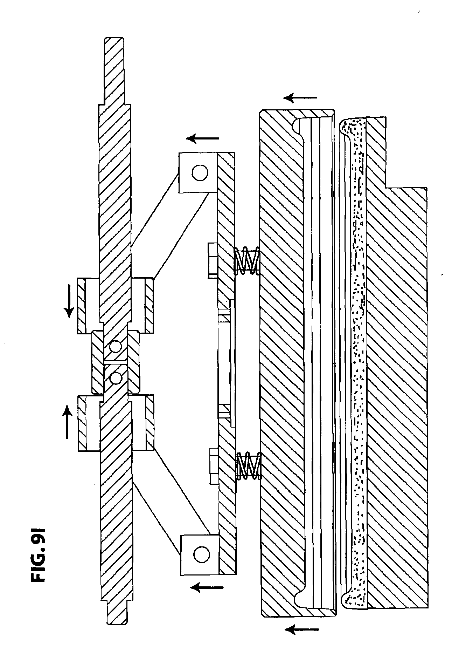

Referring now to FIG. **9A****,** the press mechanism includes heated top and bottom plates, **202** and **204,** respectively. The top plate is actuated vertically due to the rotation of a lead screw mechanism that has two halves, **210** and **211,** each having opposite directional threads. The rotation of the lead screw makes corresponding brackets **212** and **213** to move in opposite directions. These brackets, in turn, are each connected to a pair of levers that are in turn connected to a push plate **216.** The top press plate **202** hangs on this push plate through shoulder screws **218,** with light springs **219** around the shoulder screws between the two plates, to help assure that the press plate **202** does not get wedged at a non-horizontal angle, due to the screws.

The top press plate therefore descends to squeeze out and shape the dough slice **160** into, for example, an 8" pie crust. When the top plate **202** reaches its lowermost position, it forms a cavity, which is then filled up by the dough slice **160.** The dough slice therefore takes the shape of this cavity. The top and bottom press mechanisms are heated to par-bake the slice of dough to the point where the dough is rigid enough to be pushed around from station to station.

Referring now to FIGs. **9A-I****,** therein is illustrated the operation of the press mechanism. The following table lists the steps of the pressing sequence shown in each figure, from FIG. 9A to FIG. 9I.

| FIG | Pusher Plate Movement | Description |
|---|---|---|
| 9A | Down | Press plate hanging from pushing plate. |
| 9B | Down | Press top plate sitting on top of pie, with a gap between press plate & pushing plate. |
| 9C | Down | Pie being squeezed, no gap between plates. |
| 9D | End of travel | Both plates in lowermost position. Short pause in this position. |
| 9E | Up | Press plate being pushed up against pushing plate due to pressure buildup. |
| 9F | Midpoint A | Pushing plate moves up and stops at Midpoint A. Somewhere between lowermost point & Midpoint A, press plate drops back on top of pie due to release of pressure. |
| 9G | Down | Pushing plate goes back down. Press plate sitting on top of pie. |
| 9H | Midpoint B | Pusher plate stationary at Midpoint B, while press plate is raised up by rising dough. Midpoint B is the uppermost allowable rise position for the press plate. |
| 9I | Up | |

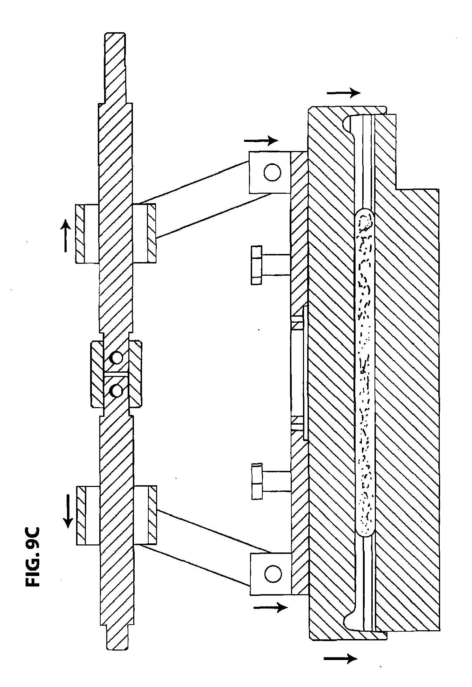

Referring now to FIGs. **9A-B****,** as the pushing plate is lowered, the top press plate first comes into contact with the slice of dough **160** and briefly stays there as the pushing plate continues its downward movement. Referring now to FIG. **9C****,** eventually the pushing plate comes back into contact with the top press plate and begins applying pressure on the dough slice through the top press plate. The slice is squeezed with consecutive slow bursts of downward movement, to allow the dough sufficient time to soften under the heat and expand without tearing or creating air pockets.

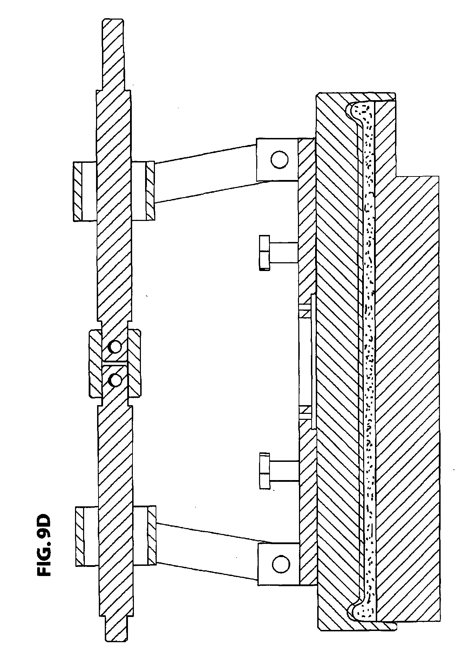

Referring now to FIG. **9D****,** as the top press plate reaches its lowermost position, the dough fills out the cavity between the plates and takes on the flat circular shape with slightly raised edges. In this position, with the dough slice in full contact with the press, the par-baking process begins, but as the cavity is fully sealed, there is a great increase in pressure between the plates.

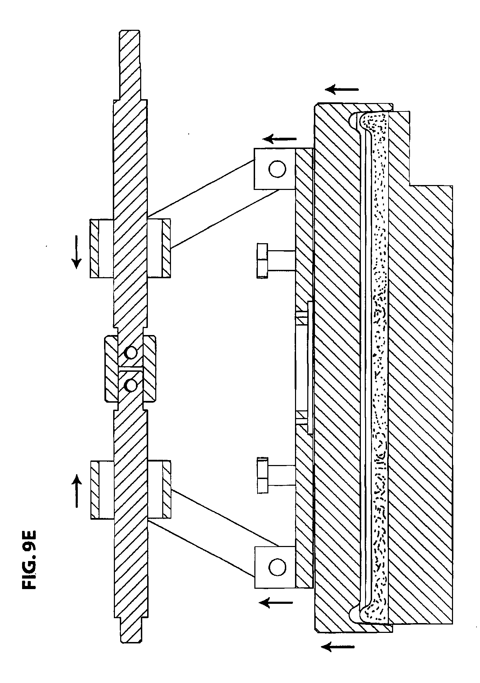

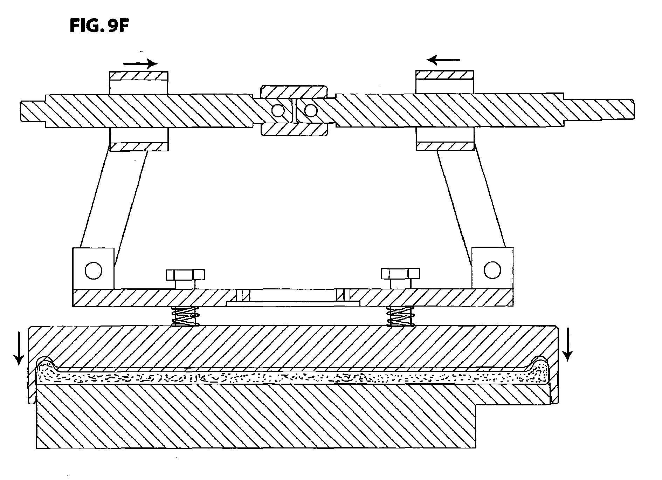

Referring now to FIG. **9E****,** in order to limit the rise in pressure, after a short delay, the pushing plate begins to move back up in timed small spurts. Initially due to the pressure, the top press plate is pushed up against the pusher plate. Referring now to FIG. **9F****,** as the plates continue to rise the seal between the plates is eventually broken and some of the pressure is evacuated, causing the top press plate to fall back onto the pie, continuing the par-baking process. The exact point when the top press plate falls back onto the pie can be at any of a range of different positions. The pushing plate needs only to retract up to a pre-determined upper limit (midpoint A) where the seal between the plates is certain to have been broken and the pressure relieved. Accordingly, the shoulder screws **218** must be of sufficient length to allow the press plate to fall back onto the pie when the pressure drops.

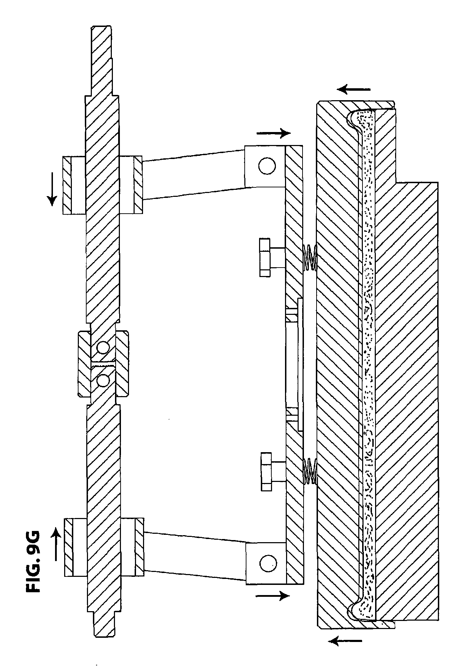

Referring now to FIGs. **9G-H****,** with the press plate on the pie, the par baking process continues and similar to any dough baking process causes the pie to rise. The press plate therefore rises with the pie. However, the pusher plate comes back down to a second position (midpoint B) and remains at that point for the duration of the par-baking process, for example, approximately 20-30 seconds. This position sets an upper limit to the rise of the press plate and the dough under it, allowing the system to produce pies of approximately equal thickness. As the dough continues to dry out in this position, its maximal thickness gets set.

In an alternate embodiment, the pressing and par baking may be performed at two different stations rather than in one location with a single mechanism. The pie may first be pressed out under the press mechanism and may subsequently be par baked in a heated chamber located between the press mechanism and the pie topping plate. This method would have the advantage of reducing the lag time between pies, because a new pie can begin to be cut and pressed out as soon as the initial pressing of the previous pie is completed, instead of waiting for the additional par-baking time.

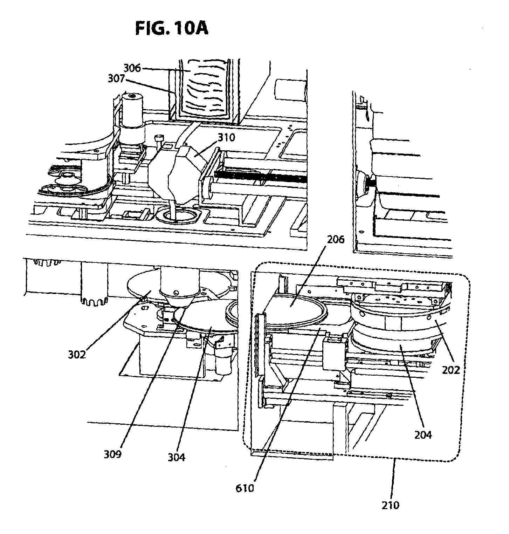

Referring now to FIGs. **10A-B****,** as the pressing and par-baking cycle approaches completion, the topping area entry door **400** opens, the turntable mechanism **302** rotates to position the topping plate **304** in line with the press bottom plate **204.** Simultaneously, the pres top plate **202** rises, and the plate transfer arm **610** then pushes the par-baked pizza crust onto the pie topping plate **304.** The plate transfer arm **610** then retracts to its original position. The dough pressing area **200** is now ready to prepare the next pizza.

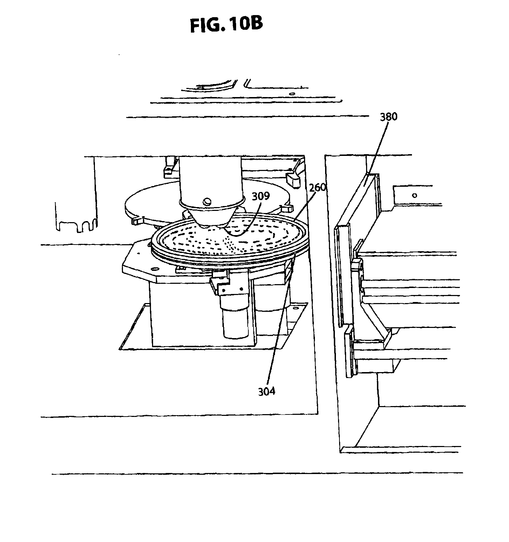

Referring now to FIG. **10B****,** the turntable **302** rotates to position the perimeter of the pizza crust **260** under the sauce tube end **309.** The crust is then rotated by the pizza topping plate **304.** Simultaneously to this, the sauce pump **310** draws sauce from the sauce bag **306** contained in the sauce container or box **307** through the sauce tube **308,** and dispenses it onto the dough crust **260.** The spinning of the plate causes the sauce to spread around the perimeter of the pie crust. When the perimeter of the pizza crust is covered with sauce the sauce pump stops pumping momentarily. During this pause, the turntable **302** rotates to now position the sauce tube end **309** further towards the center of the pizza crust. The sauce pump **310** then restarts the flow of sauce to cover the inner portion of the pie with sauce. This process is repeated once more by positioning the sauce tube end near the center of the pie crust and dispensing a small amount of sauce in the middle of the pie crust. Of course, a greater or lesser number of sauce dispensing cycles may be used, depending on the particular application. Optionally, a photosensor may be used to detect the presence of a pizza crust, and disable the sauce dispensing mechanism if a pizza crust is not detected, so as to prevent the dispensing of sauce in the event of a malfunction or improper operation.

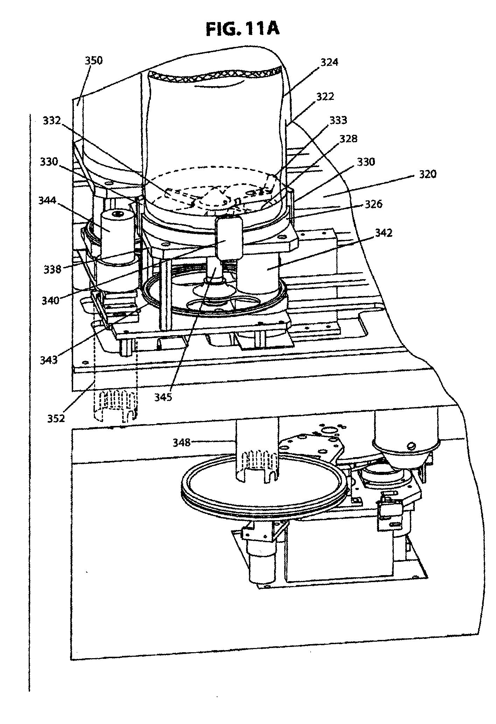

Referring now to FIG. **11A****,** therein is illustrated two cheese dispensing mechanisms, **320** and **350** respectively. Once the pizza is covered with sauce, the turntable **302** rotates to position the pizza crust **260** under the first cheese chute **348** or the second cheese chute **352,** depending upon which cheese mechanism **320** or **350** is in use. The present description refers to the operation of the first cheese mechanism **320.** The second cheese mechanism is substantially similar to the first mechanism.

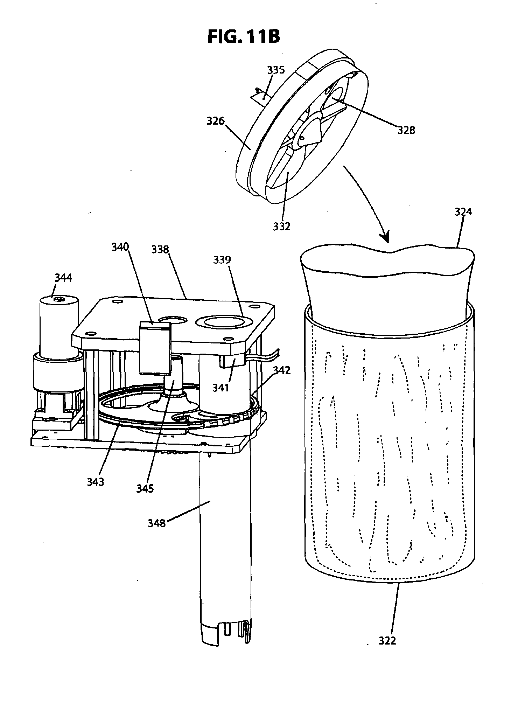

Referring now to FIG. **11B****,** the cheese dispensing mechanism includes a cylindrical silo **322,** for example, 8 inches in diameter, that contains a bag **324** of granulated cheese. The granulated cheese is commercially available and includes cubes of 1/8^{th} of an inch that may be provided in sealed bags. The cylinder diameter may be increased to increase the amount of cheese within each canister, but in such a case the bag must also be enlarged. The silo has a removable base **326.** The base includes a circular disk made out of food grade plastic. The base has a dispensing hole **328,** for example, approximately one inch in diameter, that permits the cheese to flow out. The base also has an agitating arm **332** that is shaped such that it can close the cheese dispensing hole **328** when made to stop at a particular position. The agitating arm is also shaped to have an extending scraper **333** that serves to wipe the bottom edge of the canister and promote a proper flow of cheese towards the dispensing hole.

The cheese bag **324** is inserted into the silo by removing the silo from the mechanism, turning it upside down and removing the base **326.** At this point the cheese bag **324** may be inserted into the silo, with one end sticking out. The top of the bag is then cut or ripped open and folded over the edge of the silo, similar to a trash bag over a trash can. The base **326** may then be fitted into the silo, thereby wedging the bag in place. The base **326** may then be locked in position on the silo with a pair of latches **330.** The silo may then be flipped back to a right side up position without fear of spillage due to the agitating arm **332** closing the exit hole **328** in the base **326.** The cheese silo, with the newly installed cheese bag in it is now installed onto a support platform **338** on top of the cheese dispensing system. A coupling shaft **335** of the agitating arm, extending out from the bottom of the cheese silo base, is inserted through a hole on the silo support platform **338** and into a mating hole in the center drive shaft **345.** The cheese silo is then locked into position with a pair of latches **340** that are positioned to insure that the cheese exit hole **328** of the silo base lines up with a corresponding hole **339** on the support platform. Just below these exit holes is measuring cylinder **342** that is inserted into the canister support platform hole **339** and is removable without tools in order to be cleaned. The measuring cylinder **342** is closed at the bottom by a circular rotating trap door **343.** The latter has cutout holes that, when rotated to the correct position, allow the cheese to flow out. The rotating door is connected to the drive shaft **345,** but it can be easily removed without tools in order to be cleaned by first removing the cheese silo and the measuring cylinder **342.**

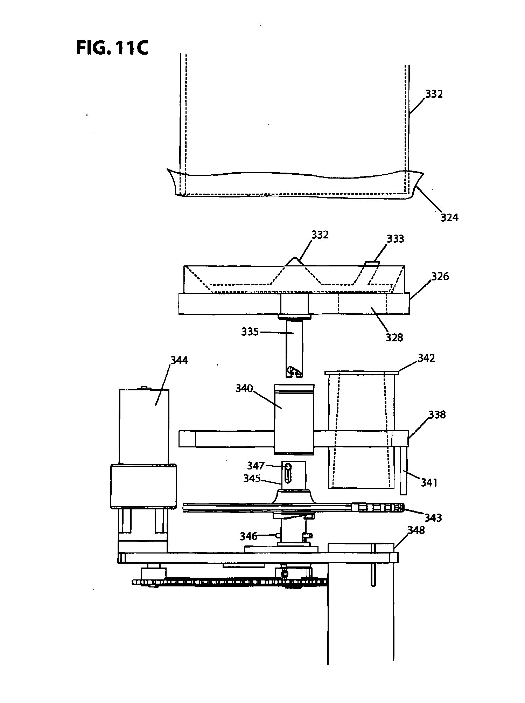

Referring now to FIG. **11C****,** a single DC motor **344,** whose direction may be reversed and the speed controlled, is used to drive both the agitating arm and the measuring cylinder trap door. The motor is coupled to the drive shaft **345.** In this case it is through a set of sprockets and a chain, but it may also be mounted directly to the drive shaft by being placed under the entire mechanism. The drive shaft **345** has a pair of internal spring-loaded drive pins, one pin **346** near the bottom which couples to the measuring cylinder trap door **343** and the other pin **347** further above which couples to the bottom of the agitating arm coupling shaft **335.** When the drive shaft **345** rotates one way the agitating arm coupling shaft **335** is engaged to actuate the cheese actuating arm, and when the drive shaft **345** rotates in the opposite direction, the buffer door **343** is engaged.

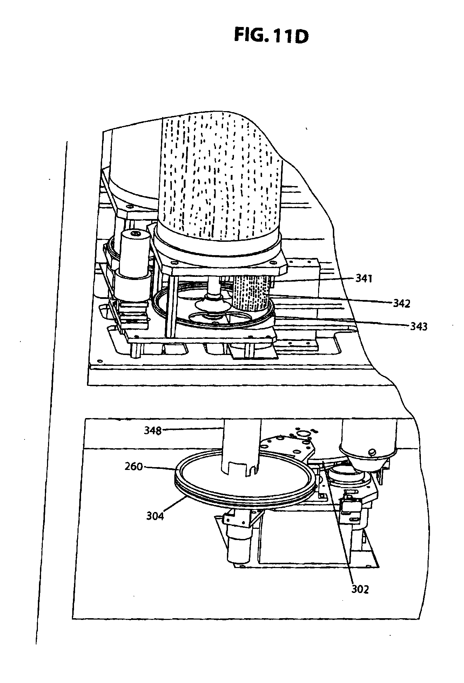

Referring now to FIG. **11D****,** therein is illustrated the cheese dispensing process. The first step in the cheese dispensing process is to fill the measuring cylinder **342** with cheese. This is accomplished by rotating the agitating arm **332** located inside the silo, and allowing the cheese to flow through the dispensing hole **328** at the base of the silo. Alternatively, the arm may simply be rotated several times without actually measuring or detecting that the measuring cylinder is full, with the assumption that a sufficient number or turns will adequately fill up the cylinder. In this alternative embodiment, a count or record must be kept to know approximately how much cheese remains in the silo. Otherwise, in the first embodiment, a sensor is mounted on the top of the cheese measuring cylinder to detect the presence of cheese at the top of the cylinder. In this case, when the sensor detects the presence of cheese near the top of the measuring cylinder, the agitating arm simply rotates enough to close the dispensing hole in the base of the silo. This method has the advantage of being able to detect if the measuring cylinder never gets filled up despite a sufficient number of turns of the agitating arm, which would indicate an empty silo condition. The measuring cylinder trap door **343** should be positioned such that it closes the bottom of the cylinder in order for the cylinder to fill up. A second sensor may also be used near the bottom of the measuring cylinder to detect that the cylinder has properly emptied, i.e., dispensed the cheese inside the cylinder.

The filling of the measuring cylinder preferably occurs prior to the pie crust being moved under either of the cheese dispensing mechanisms. After getting topped with sauce, the pie crust **260** is rotated to place the cheese chute **348** near the center of the pie.

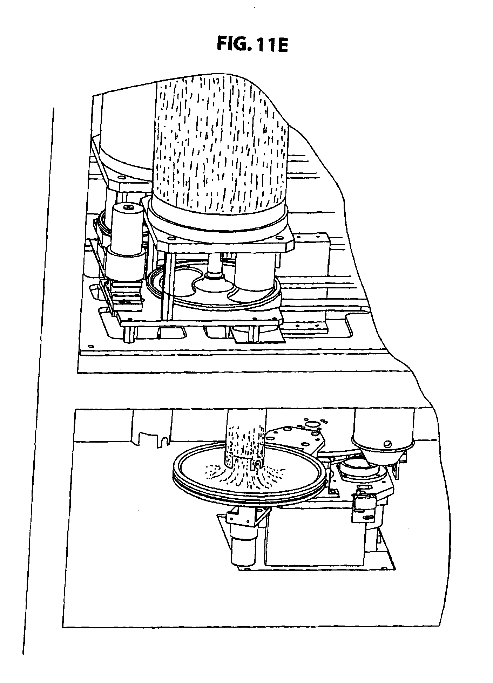

Referring now to FIG. **11E****,** the measuring cylinder trap door **343** is rotated to a position that allows the cheese within the measuring cylinder to fall onto the pie. The measuring cylinder **342** may optionally be vibrated to facilitate the emptying of the cylinder. This may be accomplished either with a separate vibrating device mounted on the measuring cylinder (e.g., a hammer type mechanism), or by adding dimples on the trap door **343** such that, as the door is rotated, it collides with a bracket that touches the measuring cylinder, thus imparting some vibration to the measuring cylinder.

As the cheese falls onto the pie, some of it spreads out beyond the perimeter of the cheese chute **348,** covering a large section of the center of the pie, but most of it remains backed up within the cheese chute **348.** The turntable **302** then rotates to position the cheese chute closer to the perimeter of the pie crust **260.** Simultaneously, the topping plate **304** begins to rotate. As the cheese chute **348** passes over sections of the pie without cheese on it, the cheese backed up in the chute empties out onto the pie, at a rate determined by the gap between the bottom of the chute and the surface of the pie, as well as the rotation speed and the shape of the rake pattern at the bottom end of the chute. The initial rotation of the topping plate is in a direction to push the cheese against the rake extensions at the bottom of the chute.

The cutout pattern at the bottom of the chute has three sections: a section with rake-like extensions that act to spread the cheese as it flows out, a solid section with no cutouts that is positioned near the perimeter of the pie and serves to limit the amount of cheese granules falling off of the pie, and an open section that comes into play at the very end of the cheese spreading cycle to allow any extra cheese remaining in the chute to fall out onto the pie.

After a timed cycle, the pie should be fully covered with cheese. However, due to potential variations in dough thickness, cheese quantity or the presence of clumps in the cheese, it is possible that not all of the cheese would have emptied from under the cheese chute. However, by having a relatively large opening in the cutout pattern at the bottom of the cheese chute, this permits the emptying of this extra cheese onto the pie by reversing the rotation of the topping plate for a short time after the pie has been completely covered.

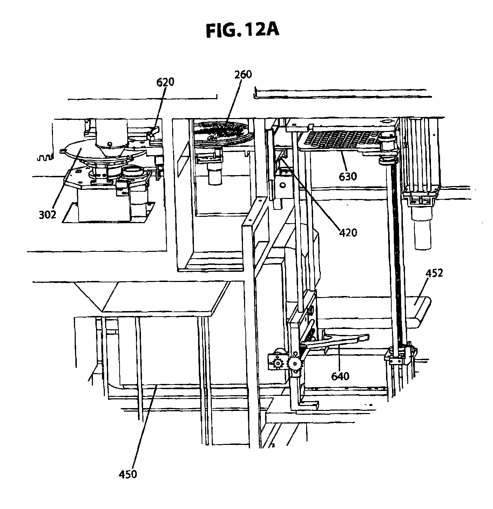

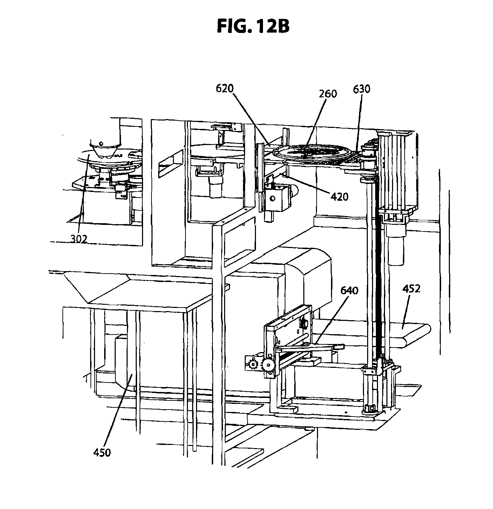

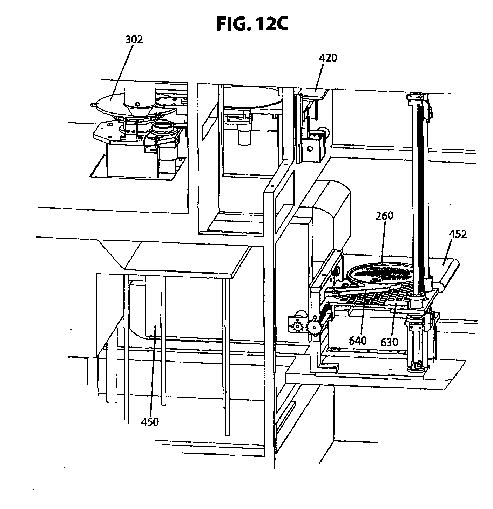

Referring now to FIGs. **12A-C****,** the pie transfer process to the oven will now be described. In these drawings, the press mechanism assembly has been removed to make the oven transfer mechanisms more visible. Once the pizza crust is covered with cheese, the turntable mechanism **302** rotates to position the pie topping plate **304** in-line with the elevator mechanism **630.** Simultaneously, the topping area exit door **420** is opened. At this point the elevator transfer arm **620** pushes the fully topped pie crust onto the elevator **630,** then retracts back to its original position. The turntable mechanism **302** is now free to rotate back to the original position to accept the next pie crust. The elevator then lowers the pizza crust to the level of the conveyor oven **450,** and the oven transfer arm **640** pushes the pizza crust onto the oven conveyor belt **452.** The oven transfer arm **640** then retracts back to its original position, as does the elevator **630.**

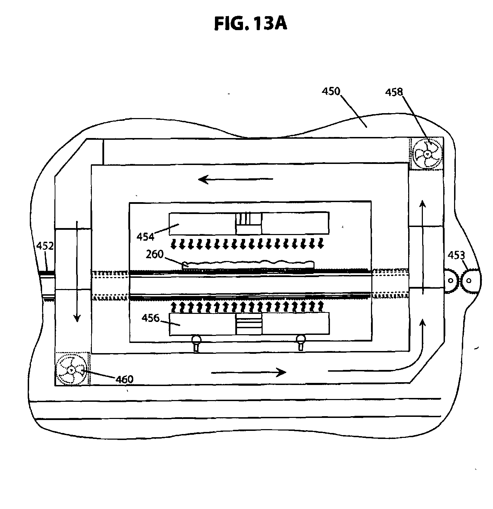

Referring now to FIG. **13A****,** the oven conveyor belt **452** turns on to transfer the pizza crust into the oven. The pizza is cooked within the oven using a pair of ceramic heating elements **454** and **456** located above and below the conveyor belt, respectively. The cooking time is approximately one minute. The cooking time may of course, be more or less, depending on many factors, such as crust thickness, oven temperature, etc. To minimize heat loss, instead of using doors, the oven generates air curtains at its entrance and exit openings to keep the hot air from escaping. These air curtains are generated with the use of two high temperature blowers **458** & **460** located at opposite corners of the oven. These blowers act to circulate a current of air around the perimeter of the oven, as indicated by the counterclockwise arrows. Once the cooking is completed, the oven conveyor belt re-activates to transfer the pizza out of the oven.

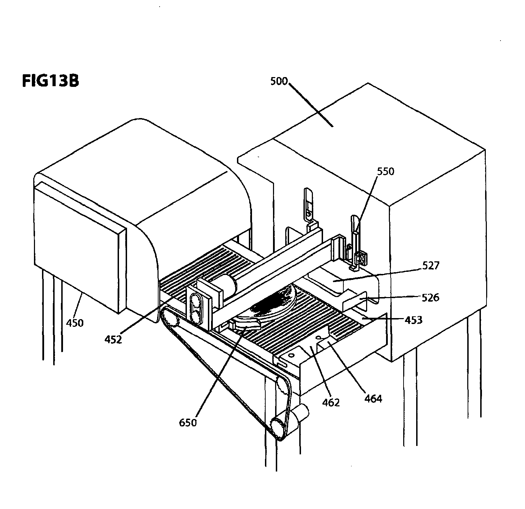

Referring now to FIG. **13B****,** as the pizza exits the oven it passes from the oven conveyor belt **452** to a smaller exit conveyor belt **453.** The pizza eventually collides with a deflector plate **462** that in turn triggers a limit switch **464** that signals for the conveyor belt to stop turning. Before describing the pie boxing process, the box preparation and forming process is now described.

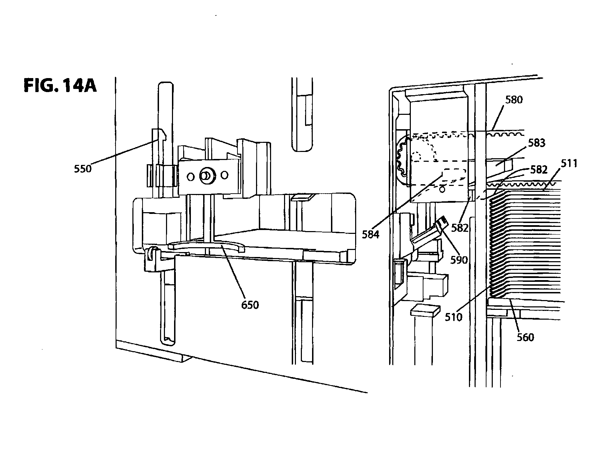

Referring now to FIG. **14A****,** therein is illustrated the pizza box forming system **500.** The forming system includes two main areas: the box stack area **502** and the box flap closing area **503.** The box stack area includes a stack elevator mechanism **560** that supports the stack of boxes **510** and the box separator belt **580** that transfers the topmost box **511** from the stack to the box flap closing area **503.** The latter includes box bender mechanism **590,** a pair of flap closing mechanisms, one in the front **530** and one in the rear **531.** Finally, there is also a box transfer mechanism **650** that serves to push the pizza into an opened box, and then to push the closed box out of the machine.

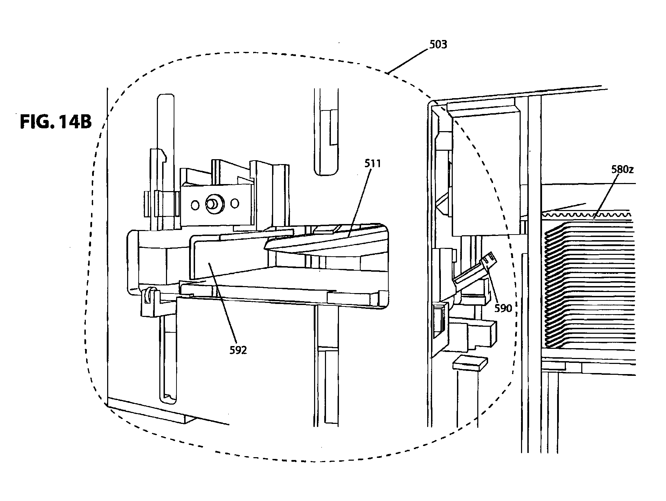

Referring now to FIG. **14B****,** to separate a new box, the box separator belt **580** begins to spin as the box stack elevator mechanism **560** begins to rise. The topmost box **511** eventually comes into contact with the spinning separator belt **580.** As enough pressure develops between the box stack and the belt, sufficient friction force is eventually generated for the belt to move the topmost box forward onto the box separation platform **582.** A sensor or limit switch **584,** shown with hidden lines and located above the separator platform detects the presence of the newly separated box and signals both the separator belt **580** and the box stack elevator **560** mechanism to stop moving. The stack elevator then reverses direction and begins to descend a short distance to relieve the pressure between the box stack and the separator belt. This ensures that a second box is not separated, because the previous box fully occupies the space available between the separator platform **582** and the belt **580,** whereas there is no longer any friction between the belt and the next box on the stack.

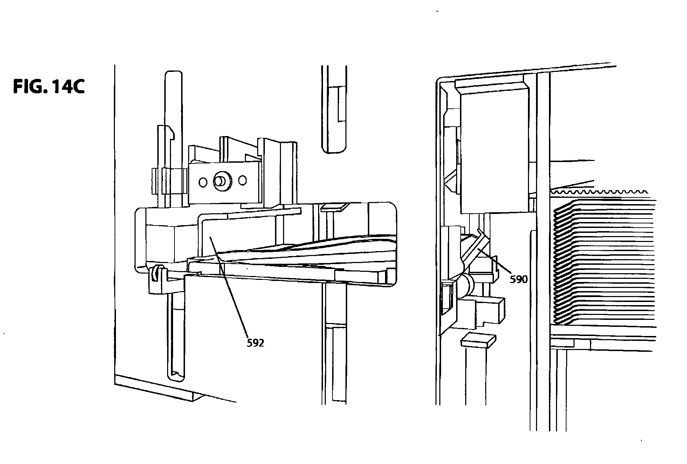

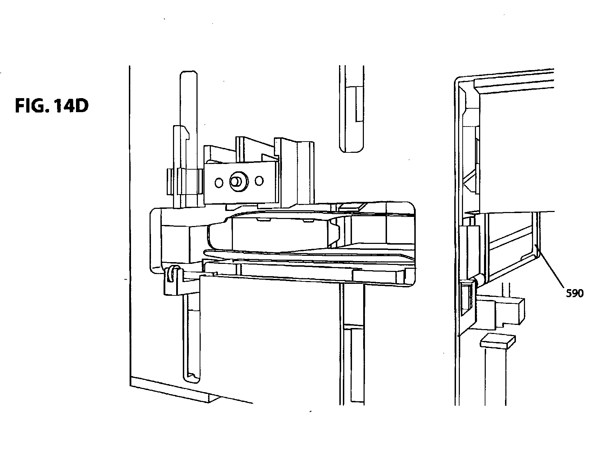

Referring now to FIGs. **14C-D****,** the box separator belt **580** now recommences spinning and pushes the separated box down into flap closing area **503.** Referring now to FIG. **14D****,** the newly separated box is bent open by the rotation of the box bending mechanism **590.** The box is kept in position by the box bender pushing the box against the box support bracket **592,** shown in FIG. **14D****.** The box is now in position, open and ready to accept the next pie.

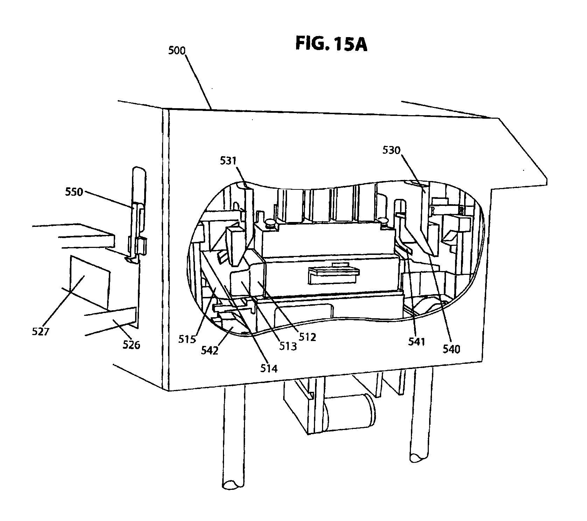

Now referring to FIG. **15A****,** therein is illustrated the rear flap closing mechanism **531,** and the box transfer arm mechanism **650,** as well as an opened pizza box **512,** with the front and rear left side latching tongues **513** visible, along with the rear box closing flap **514,** and the flap top latching tongue **515,** which is the top part of the box closing flap **514.**

Now, as the pie exits the oven and is centered with the box transfer arm **650,** the latter moves forward to push the pizza into the previously opened box **512.** As the pizza advances, it first moves over the bridge platform **526** and contacts a rotating box flap bridge **527** which pushes it down over the box flap **514,** allowing the pie to slide freely into the box without interference from the box flap **514.** In order not to interfere with the box flap closing process, the box transfer arm **650** then retracts back over the rotating flap bridge **527,** out of the box flap closing area **503** and comes to a rest over the bridge platform **526.**

At this point the front and rear flap closing mechanisms, **530** and **532,** respectively, activate simultaneously to fold and then to close the front and rear box flaps **514.** The operation of the rear flap folder **532** will now be described, it being understood that the front folder **530** operates in an essentially substantially similar fashion. The sub-components of the front and rear flap folding mechanisms have been numbered in a similar fashion. The following is a description of the flap closing process.

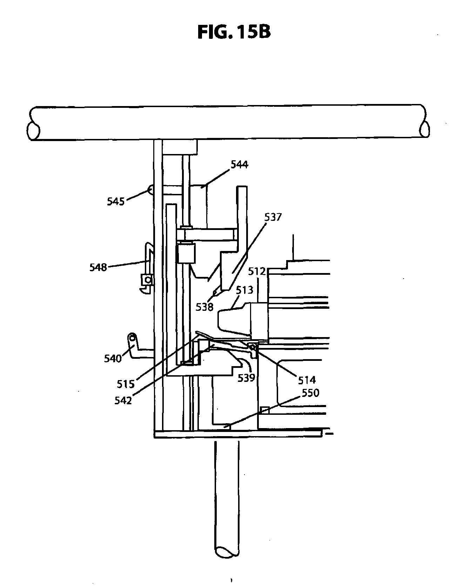

Referring now to FIG. **15B****,** the rear flap closing mechanism **532** is shown from a left side view. The mechanism includes a flap folding and pushing block **536** that moves down and then up, a flap closing guide **544** that is pushed down by the flap folding and pushing block and is pulled back up by a pull-up spring **546,** a flap closing arm **542** and finally a stationary deflector **550** for the box flap top latching tongue. Although, the flap folding and pushing block **536** and the flap closing guide **544** are mounted on the same guide shaft **534,** the actuating motor, not shown in the figure, is connected only to the flap folding and pushing block **536.** As the latter moves down and then up the guide shaft **534,** it comes into contact with the flap closing guide **544** and moves it as well. The flap folding and pushing block **536** is shaped to have three features or surfaces: the side tongue bending deflectors **537,** the flap bending deflectors **538,** and the flap closing arm deflectors **539.** Due to the left hand side view of FIG. **15B****,** only one of each of these features, those on the left hand side are illustrated. They are repeated in a symmetrical fashion on the right hand side as well.

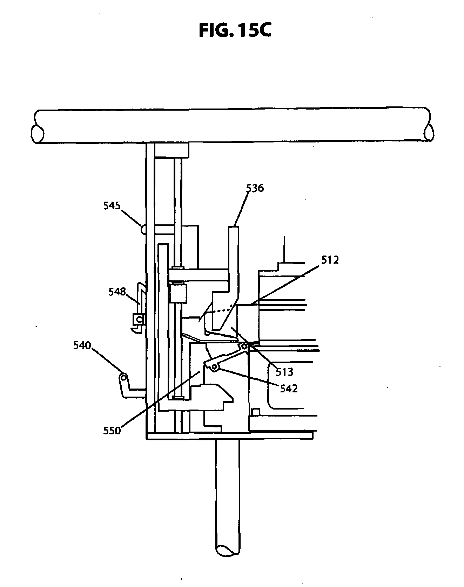

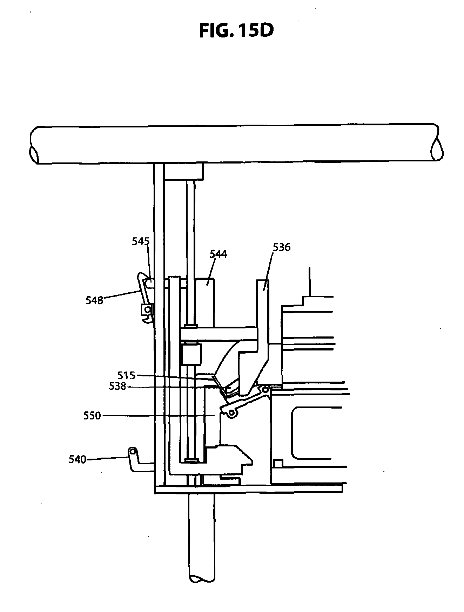

Referring now to FIGs. **15C** and **D****,** the flap closing cycle commences with the downward movement of the box flap folding and pushing block **536.** As the latter descends, the side tongue bending deflectors **537** come into contact with the side latching tongues **513,** and bend the latter inwards. Simultaneously, the flap bending deflectors **538** come into contact with the crease on the box closing flap **514,** and bend the latter downward. As the flap **514** bends downward, the flap top latching tongue **515** comes into contact with the flap top deflector **550,** and gets bent inward.

During this downward movement of the box flap folding and pushing block **536,** as it is bending the box flap and tongues, it also pushes the flap closing guide mechanism **544** down to a position in front of the box opening, where the latter is held by a spring loaded latching hook **548** that holds onto latching extensions **545** on the flap closing guide.

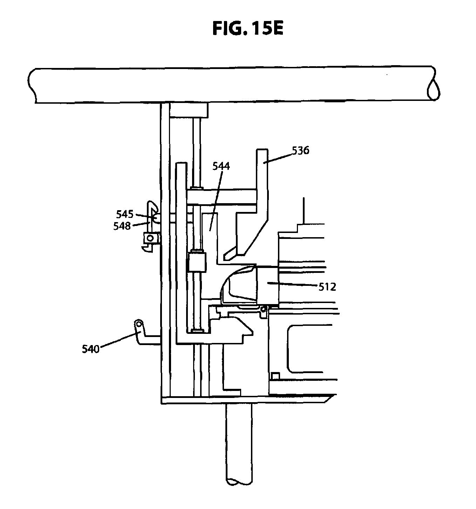

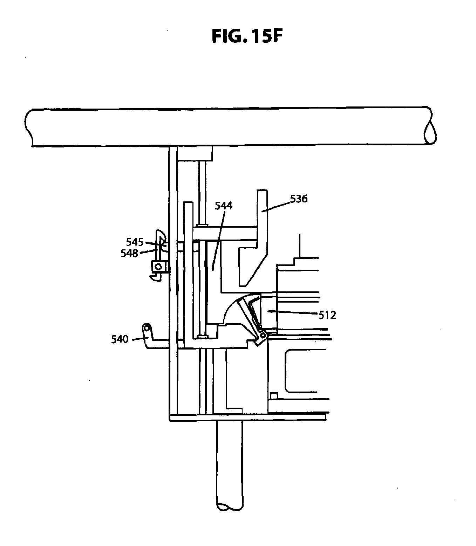

Referring now to FIGs. **15E** and **F****,** the box flap folding and pushing block **536** now rises back to its original upper position, but the flap closing guide mechanism **544** remains in place due to the latching hook **548.** At this point, the lower section of the flap folding and pushing block **536,** the flap closing arm deflector **539,** comes into contact with the flap closing arm mechanism **542,** which rotates upwards to push the now bent box flap **514** up. As the upper flap tongue **515** slides against the flap closing guide mechanisms **544,** it gets inserted into the box.

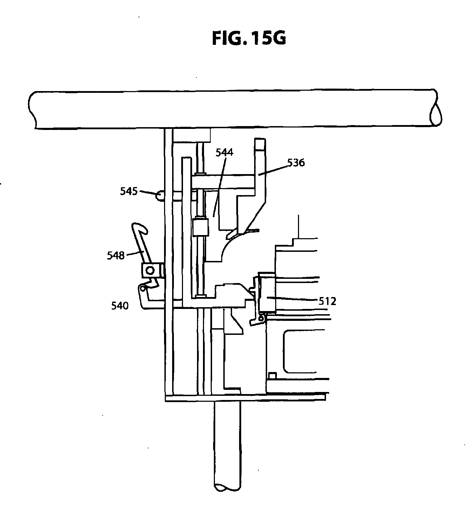

Referring now to FIG. **15G****,** as the flap folding and pushing block **536** approaches its uppermost position, the flap closing arm mechanism **542** rotates to a position beyond vertical, pushing the upper flap tongues all the way into the box, thus completing the box closing process. Finally, the box flap having been closed, the latching hook **548,** which keeps the flap closing guide **544** in place, is released by the latching hook release cam **540** that is attached to the flap folding and pushing block **536,** as the latter reaches its uppermost position. The triggering of the latching hook **548** allows the flap closing guide **544** to be pulled up from in front of the box by the springs **546.**

Finally, the flap folding and pushing block **536** descends from its uppermost position back to its original position to clear the way for the box to be pushed out.

The box is then pushed out of both the flap closing area **503** and the machine by the forward movement of the box transfer arm **650,** which advances all the way forward. The box transfer arm **650** then retracts all the way back to its original position. Finally, the pie bridge rotating flap **527** is pulled back up to the vertical position by a solenoid mechanism (not shown) to position it to be ready for the next pie. The flap closing mechanism is now ready to accept a newly separated box to be opened for the next pie.

The various mechanisms in the machine are driven by, for example, 24V DC motors, as well as mechanisms actuated by AC or DC solenoids. The machine also has a number of heater elements used as heat sources for the oven and hot press that cook the pie, as well as AC fans and hot air blowers. A central controller called the Vending Machine Controller (VMC) handles the customer interface tasks like validating the monetary transaction, printing out receipts, displaying messages, and communicating with the owner/operator's computer system for remote monitoring and control.

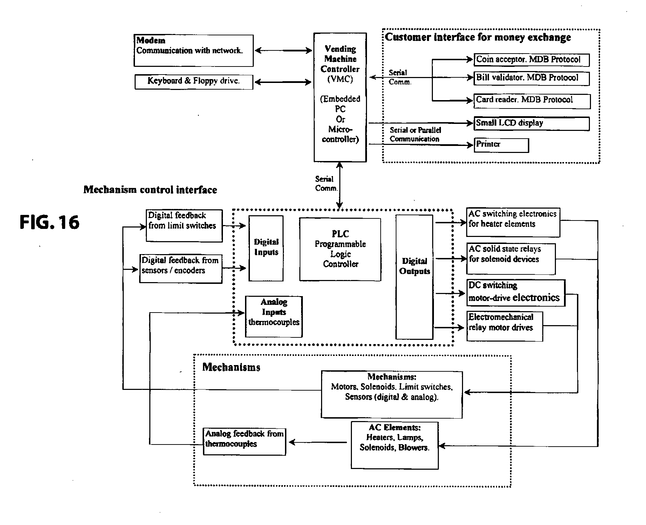

The actual control of the pizza making process and the mechanisms may be performed by a Programmable Logic Controller (PLC), a common type of controller in industrial applications. In this case, the VMC and the PLC may communicate via a serial port or some other type of communication connection. FIG. **16** is a block diagram showing the various functional elements of the control system.

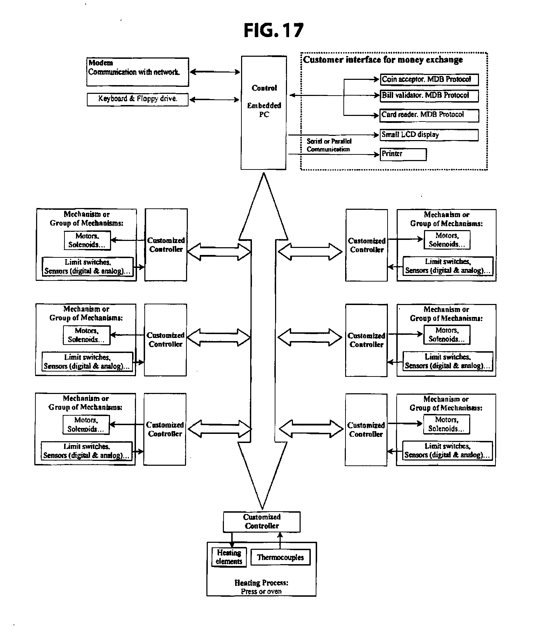

In an alternative configuration for the control system, the mechanism control tasks may be handled by customized controllers designed to handle either one mechanism or a group of related mechanisms, such as the canister handling and dough portioning system, the pressing system, the pie topping system. Whereas, the VMC manages the controllers for each sub-assembly or module, each individual controller would then be responsible to govern the movements of the mechanisms in that particular module. The advantage of this methodology over the PLC solution is first of all a reduction of wiring and associated costs, as this latter approach would only require two to four wires going from each controller to the VMC for power and communications. The controllers would in this case be located much closer to the sub-assembly to be controlled, thereby reducing potential noise pickup on the wires. Finally, customized controllers may be more economical to produce in volume. FIG. **17** is a block diagram of this alternative control system.

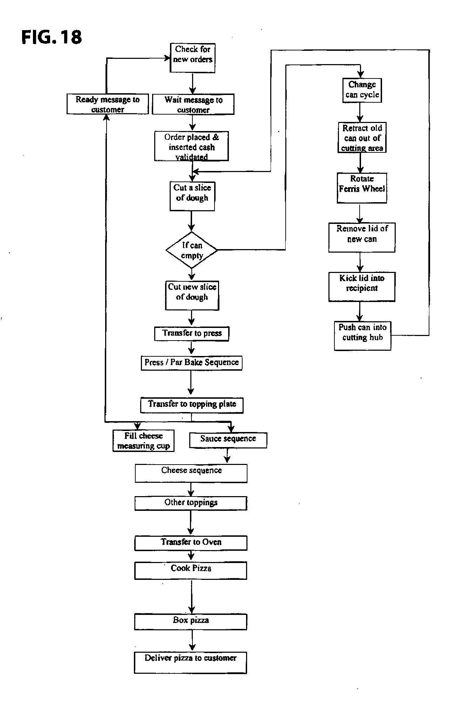

FIG. **18** is a flowchart illustrating the steps involved in the pizza ordering and preparation process. The VMC monitors the customer interface to see if an order is requested or if money has been deposited within the machine. If the Vending Machine is ready to make pies and when an order has been placed and the money accepted, the vending machine indicates to the PLC to commence a pie making cycle. The latter includes cutting a slice of dough, pressing and par-baking it, topping it, cooking it, and boxing it. A new order may be started as soon as the press area is free.

It is to be understood that the drawings are not necessarily drawn to scale, but that they are merely conceptual in nature. It is the intention, therefore, to be limited only as indicated by the scope of the claims appended hereto.

## Claims

1. An apparatus (10) for making a food product, comprising:
a dough storage mechanism (100) including a plurality of receptacles (104) each for receiving a respective dough container (106);
a dough handling mechanism including an extruder (121) operable to extract a predetermined portion of dough from one of said dough containers;
a dough cutting mechanism (150) including at least one knife blade (152) operable to cut said predetermined dough portion from one of said dough containers to create a cut dough portion;
a dough pressing mechanism (200) operable to receive the cut dough portion and including at least one pressing plate operable to apply pressure to said cut dough portion to create a crust;
a baking mechanism including at least one heated plate (202) operable to apply heat to said crust;
at least one topping storage and dispensing mechanism operable to dispense at least one topping onto said crust, the topping and dispensing mechanism comprising:
at least one topping container (321) comprising a base (326) with an outlet (328);
a first door (332) operatively coupled to the outlet in the base and configured to selectively allow and prevent the at least one topping from exiting the outlet in the base;
a measuring container (342) positioned below the base and having a top opening and a bottom opening, the measuring container configured to receive via the top opening a predetermined amount of the at least one topping dispensed from the outlet of the base, the measuring container operable to dispense via the bottom opening the predetermined amount of received topping onto said crust; and
a second door (343) operatively coupled to the bottom opening of the measuring container and configured to selectively allow and prevent the predetermined amount of received topping from exiting the bottom opening;
an oven (450) including at least one heating element (456) operable to receive said crust containing said at least one topping and to provide heat for cooking said crust containing said at least one topping; and
a packaging mechanism (500) operable to receive a plurality of packages (510), and including a folding mechanism (590) operable to fold one of said packages, such that said cooked food product may be received into said folded package.

2. The apparatus of claim 1 wherein the at least one topping includes sauce and the at least one topping container includes a sauce container and the dispensing mechanism includes:
a pump (310) for selectively dispensing the sauce from the sauce container (306) onto the crust; and
a rotating mechanism (302) for supporting the crust and rotating the crust relative to the sauce container such that sauce is dispensed from the sauce container as the crust is rotated relative to the sauce container;

3. The apparatus of claim 2, wherein the sauce is dispensed in a generally circular pattern onto the crust and the rotating mechanism further includes an indexing apparatus for indexing the crust in a direction generally orthogonal to a direction of the sauce being dispensed such that sauce can then be dispensed in a generally circular pattern onto an area of the crust which has not yet been dispensed with sauce.

4. The apparatus of claim 1, wherein the base comprises an agitator (345) movably disposed in the topping container for agitating the at least one topping stored in the topping container towards the outlet in the base, the agitator comprising at least one arm (332) that functions as the first door to selectively open and close the outlet in the base.

5. The apparatus of claim 4, wherein the at least one topping dispenser is removably coupled to a top surface of a support, and the measuring container is removably coupled to a bottom surface of the support.

6. The apparatus of claim 5, further comprising a drive shaft disposed under the support, and wherein the support comprises a drive opening, the agitator comprises a coupling shaft (335) connected to the at least one arm, the coupling shaft configured to extend through the drive opening and engage the drive shaft, and the second door comprises a trap surface (332) rotatably mounted under the bottom opening of the measuring container, the trap surface comprising an opening for selectively opening and closing the bottom opening, the trap surface connected to the drive shaft.

7. The apparatus of claim 1, further comprising a first photosensor positioned in proximity to the measuring container for providing a signal indicating when the predetermined amount of the at least one topping has been provided from the at least one topping container into the measuring container, the second door opening the bottom opening of the measuring container in accordance with the signal from the first photosensor.

8. The apparatus of claim 7, further including a second photosensor positioned in proximity to a bottom portion of the measuring container for providing a signal indicating that the predetermined amount of the at least one topping in the measuring container has been dispensed.

9. The apparatus of claim 1, wherein the rotating mechanism (302) is operable to rotate the crust relative to the measuring container such that the at least one topping is dispensed from the measuring container as the crust is rotated relative to the measuring container.

10. The apparatus of claim 9, further comprising a vibrating mechanism for applying vibrations to the measuring container as the predetermined amount of the at least one topping is being dispensed.

11. The apparatus of claim 10, wherein the vibrating mechanism includes a hammer adapted to engage the measuring container, or a plurality of bumps positioned on the measuring container which are engaged during rotation of the crust.

12. The apparatus of claim 1, further including a refrigerated section for housing the at least one topping container

13. The apparatus of claim 1, wherein the packages are initially in the form of flat boxes (510) which are in a stacked arrangement, and the packaging mechanism includes a box separator belt (580) operable to frictionally engage and separate a selected package from the stack of flat boxes, and an elevator mechanism (560) operable to lower the stack of flat boxes once the separator belt has engaged and separated the selected box from the stack of flat boxes.

14. The apparatus of claim 13, wherein the packaging mechanism includes a box bending mechanism for (590) bending said selected flat box into a generally three-dimensional box having a front flap (530) and a rear flap (531), and wherein said folding mechanism includes a rear flap folding mechanism and a front flap folding mechanism.

15. The apparatus of claim 1, wherein the apparatus is provided in the form of a vending machine.

## Patentansprüche

1. Vorrichtung (10) zum Herstellen eines Nahrungserzeugnisses, umfassend:
einen Teigspeichermechanismus (100), der eine Vielzahl von Sammelgefäßen (104) einschließt, jedes zum Aufnehmen eines entsprechenden Teigbehälters (106);
einen Teigtransportmechanismus, der einen Extruder (121) einschließt, der betriebsfähig ist, eine vorbestimmte Portion Teig aus einem der Teigbehälter zu entnehmen;
einen Teigschneidmechanismus (150), der mindestens eine Messerklinge (152) einschließt, die betriebsfähig ist, die vorbestimmte Teigportion aus einem der Teigbehälter zu schneiden, um eine geschnittene Teigportion zu erzeugen;
einen Teigpressmechanismus (200), der betriebsfähig ist, die geschnittene Teigportion aufzunehmen, und mindestens eine Pressplatte einschließt, die betriebsfähig ist, Druck auf die geschnittene Teigportion auszuüben, um einen Boden zu erzeugen;
einen Backmechanismus, der mindestens eine beheizte Platte (202) einschließt, die betriebsfähig ist, dem Boden Wärme zuzuführen;
mindestens einen Belagspeicher- und -abgabemechanismus, der betriebsfähig ist, mindestens einen Belag auf den Boden abzugeben, wobei der Belagspeicher- und -abgabemechanismus umfasst:
mindestens einen Belagbehälter (322), der einen Fuß (326) mit einer Austrittsöffnung (328) umfasst;
eine erste Tür (332), die betrieblich mit der Austrittsöffnung im Fuß gekoppelt und dafür konfiguriert ist, selektiv zu ermöglichen und zu verhindern, dass der mindestens eine Belag die Austrittsöffnung im Fuß verlässt;
einen Messbehälter (342), der unterhalb des Fußes angeordnet ist und eine obere Öffnung und eine untere Öffnung hat, wobei der Messbehälter dafür konfiguriert ist, über die obere Öffnung eine vorbestimmte Menge des mindestens einen Belags, der aus der Austrittsöffnung des Fußes abgegeben wird, aufzunehmen, wobei der Messbehälter betriebsfähig ist, über die untere Öffnung die vorbestimmte Menge des aufgenommenen Belags auf den Boden abzugeben; und
eine zweite Tür (343), die betrieblich mit der unteren Öffnung des Messbehälters gekoppelt und dafür konfiguriert ist, selektiv zu ermöglichen und zu verhindern, dass die vorbestimmte Menge des aufgenommenen Belags die untere Öffnung verlässt;
einen Ofen (450), der mindestens ein Heizelement (456) einschließt, das betriebsfähig ist, den Boden, der den mindestens einen Belag enthält, aufzunehmen und Wärme zum Backen des Bodens, der den mindestens einen Belag enthält, bereitzustellen; und
einen Verpackungsmechanismus (500), der betriebsfähig ist, eine Vielzahl von Packungen (510) aufzunehmen, und einen Faltmechanismus (590) einschließt, der betriebsfähig ist, eine der Packungen zu falten, sodass das gebackene Nahrungserzeugnis in der gefalteten Packung aufgenommen werden kann.

2. Vorrichtung nach Anspruch 1, worin der mindestens eine Belag Soße einschließt und der mindestens eine Belagbehälter einen Soßenbehälter einschließt und der Abgabemechanismus einschließt:
eine Pumpe (310) zum selektiven Abgeben der Soße aus dem Soßenbehälter (306) auf den Boden; und
einen Drehmechanismus (302) zum Halten des Bodens und Drehen des Bodens relativ zum Soßenbehälter, sodass die Soße aus dem Soßenbehälter abgegeben wird, während der Boden relativ zum Soßenbehälter gedreht wird.

3. Vorrichtung nach Anspruch 2, worin die Soße in einem im Großen und Ganzen kreisförmigen Muster auf den Boden abgegeben wird und der Drehmechanismus ferner eine Indexiervorrichtung einschließt, und zwar zum Indexieren des Bodens in einer Richtung, die im Großen und Ganzen senkrecht zu einer Richtung der abgegebenen Soße ist, sodass Soße dann in einem im Großen und Ganzen kreisförmigen Muster auf einen Bereich des Bodens, auf den noch keine Soße abgegeben worden ist, abgegeben werden kann.

4. Vorrichtung nach Anspruch 1, worin der Fuß ein Rührwerk (345) umfasst, das im Belagbehälter beweglich angeordnet ist, und zwar zum Rühren des mindestens einen in dem Belagb0ehälter gespeicherten Belags zu der Austrittsöffnung im Fuß, wobei das Rührwerk mindestens einen Arm (332) umfasst, der als die erste Tür fungiert, um die Austrittsöffnung im Fuß selektiv zu öffnen und zu schließen.

5. Vorrichtung nach Anspruch 4, worin die mindestens eine Belagabgabevorrichtung lösbar mit einer Oberseite einer Halterung gekoppelt ist und der Messbehälter lösbar mit einer Unterseite der Halterung gekoppelt ist.

6. Vorrichtung nach Anspruch 5, ferner eine Antriebswelle umfassend, die unter der Halterung angeordnet ist, und worin die Halterung eine Antriebsöffnung umfasst, das Rührwerk eine mit dem mindestens einen Arm verbundene Kopplungswelle (335) umfasst, wobei die Kopplungswelle so konfiguriert ist, dass sie sich durch die Antriebsöffnung erstreckt und in die Antriebswelle eingreift, und die zweite Tür eine Auffangfläche (332) umfasst, die unter der unteren Öffnung des Messbehälters drehbar angebracht ist, wobei die Auffangfläche eine Öffnung zum selektiven Öffnen und Schließen der unteren Öffnung umfasst, wobei die Auffangfläche mit der Antriebswelle verbunden ist.

7. Vorrichtung nach Anspruch 1, ferner einen ersten Fotosensor umfassend, der in der Nähe des Messbehälters angeordnet ist, und zwar zum Bereitstellen eines Signals, das angibt, wann die vorbestimmte Menge des mindestens einen Belags aus dem mindestens einen Belagbehälter in den Messbehälter zugeführt worden ist, wobei die zweite Tür die untere Öffnung des Messbehälters gemäß dem Signal vom ersten Fotosensor öffnet.

8. Vorrichtung nach Anspruch 7, ferner einen zweiten Fotosensor umfassend, der in der Nähe eines unteren Abschnitts des Messbehälters angeordnet ist, und zwar zum Bereitstellen eines Signals, das angibt, dass die vorbestimmte Menge des mindestens einen Belags im Messbehälter abgegeben worden ist.

9. Vorrichtung nach Anspruch 1, worin der Drehmechanismus (302) betriebsfähig ist, den Boden relativ zum Messbehälter zu drehen, sodass der mindestens eine Belag aus dem Messbehälter abgegeben wird, während der Boden relativ zum Messbehälter gedreht wird.

10. Vorrichtung nach Anspruch 9, ferner umfassend einen Rüttelmechanismus zum Ausüben von Rüttelbewegungen auf den Messbehälter, während die vorbestimmte Menge des mindestens einen Belags abgegeben wird.

11. Vorrichtung nach Anspruch 10, worin der Rüttelmechanismus einen Hammer, der dafür eingerichtet ist, in den Messbehälter einzugreifen, oder eine Vielzahl von auf dem Messbehälter angeordneten Höckern, in die während der Drehung des Bodens eingegriffen wird, einschließt.

12. Vorrichtung nach Anspruch 1, ferner einen gekühlten Abschnitt zum Unterbringen des mindestens einen Belagbehälters einschließend.

13. Vorrichtung nach Anspruch 1, worin die Packungen anfangs in Form von flachen Schachteln (510) vorliegen, die in einer gestapelten Anordnung vorliegen, und der Verpackungsmechanismus einschließt: einen Schachteltrenngürtel (580), der betriebsfähig ist, eine ausgewählte Packung vom Stapel flacher Schachteln reibschlüssig zu ergreifen und zu trennen, und einen Hebemechanismus (560), der betriebsfähig ist, den Stapel flacher Schachteln abzusenken, sobald der Trenngürtel die ausgewählte Packung vom Stapel flacher Schachteln ergriffen und getrennt hat.

14. Vorrichtung nach Anspruch 13, worin der Verpackungsmechanismus einen Schachtelfaltmechanismus (590) zum Falten der ausgewählten flachen Schachtel zu einer im Großen und Ganzen dreidimensionalen Schachtel mit einer vorderen Klappe (530) und einer hinteren Klappe (531) einschließt und worin der Faltmechanismus einen hinteren Klappenfaltmechanismus und einen vorderen Klappenfaltmechanismus einschließt.

15. Vorrichtung nach Anspruch 1, worin die Vorrichtung in Form eines Verkaufsautomaten bereitgestellt wird.

## Revendications

1. Dispositif (10) pour la fabrication d'un produit alimentaire, comprenant:
un mécanisme de stockage de pâte (100) incluant une pluralité de logements (104) dont chacun est destiné à recevoir un récipient à pâte (106) respectif;
un mécanisme de manipulation de la pâte incluant un extrudeur (121) pouvant fonctionner pour extraire une portion prédéterminée de pâte de l'un desdits récipients à pâte;
un mécanisme de coupe de la pâte (150) incluant au moins une lame de couteau (152) pouvant fonctionner pour couper ladite portion de pâte prédéterminée provenant de l'un desdits récipients à pâte pour former une portion de pâte coupée;
un mécanisme de pressage de la pâte (200) pouvant fonctionner pour recevoir la portion de pâte coupée et incluant au moins une plaque de pressage pouvant fonctionner pour appliquer une pression sur ladite portion de pâte coupée pour former une croûte;
un mécanisme de cuisson incluant au moins une plaque chauffée (202) pouvant fonctionner pour appliquer de la chaleur à ladite croûte;
au moins un mécanisme de stockage et de distribution de garniture pouvant fonctionner pour distribuer au moins une garniture sur ladite croûte, le mécanisme de stockage et de distribution de garniture comprenant:
au moins un récipient à garniture (322) comprenant une base (326) pourvue d'une sortie (328);
une première porte (332) couplée de manière fonctionnelle à la sortie dans la base et configurée pour permettre et empêcher, de manière sélective, la sortie de l'au moins une garniture par la sortie dans la base;
un récipient mesureur (342) positionné au-dessous de la base et comportant une ouverture de sommet et une ouverture de fond, le récipient mesureur étant configuré pour recevoir, par le biais de l'ouverture de sommet, une quantité prédéterminée de l'au moins une garniture distribuée par la sortie dans la base, le récipient mesureur pouvant fonctionner pour distribuer, par le biais de l'ouverture de fond, la quantité prédéterminée de garniture reçue sur ladite croûte; et
une seconde porte (343) couplée de manière fonctionnelle à l'ouverture de fond du récipient mesureur et configurée pour permettre et empêcher, de manière sélective, la sortie de la quantité prédéterminée de garniture reçue par l'ouverture de fond;
un four (450) incluant au moins un élément chauffant (456) pouvant fonctionner pour recevoir ladite croûte contenant ladite au moins une garniture et pour fournir la chaleur nécessaire à la cuisson de ladite croûte contenant ladite au moins une garniture; et
un mécanisme d'emballage (500) pouvant fonctionner pour recevoir une pluralité d'emballages (510) et comprenant un mécanisme de pliage (590) pouvant fonctionner pour plier un desdits emballages, de telle sorte que ledit produit alimentaire cuit puisse être reçu dans ledit emballage plié.

2. Dispositif selon la revendication 1, dans lequel ladite au moins une garniture inclut une sauce et l'au moins un récipient à garniture inclut un récipient à sauce et le mécanisme de distribution comprend:
une pompe (310) pour distribuer de manière sélective la sauce du récipient à sauce (306) sur la croûte; et
un mécanisme rotatif (302) pour supporter la croûte et faire tourner la croûte par rapport au récipient à sauce, de telle sorte que la sauce soit distribuée depuis le récipient à sauce à mesure que la croûte tourne par rapport au récipient à sauce.

3. Dispositif selon la revendication 2, dans lequel la sauce est distribuée selon un motif globalement circulaire sur la croûte et le mécanisme rotatif inclut, en outre, un dispositif de repérage pour repérer la croûte dans une direction généralement orthogonale à une direction de la sauce distribuée, de telle sorte que la sauce puisse être distribuée selon un motif globalement circulaire sur une zone de la croûte sur laquelle la sauce n'a pas encore été distribuée.

4. Dispositif selon la revendication 1, dans lequel la base comprend un agitateur (345) disposé de manière mobile dans le récipient à garniture pour agiter l'au moins une garniture stockée dans le récipient à garniture en direction de la sortie dans la base, l'agitateur comprenant au moins un bras (332) qui fait fonction de première porte pour ouvrir et fermer de manière sélective la sortie dans la base.

5. Dispositif selon la revendication 4, dans lequel l'au moins un récipient à garniture est couplé de manière amovible à une surface supérieure d'un support et le récipient mesureur est couplé de manière amovible à une surface inférieure du support.

6. Dispositif selon la revendication 5, comprenant, en outre, un arbre de commande disposé sous le support, et dans lequel le support comprend une ouverture de commande, l'agitateur comprend un arbre d'accouplement (335) connecté à l'au moins un bras, l'arbre d'accouplement étant configuré pour s'étendre à travers l'ouverture de commande et se mettre en prise avec l'arbre de commande, et la seconde porte comprend une surface de réception (332) montée de manière rotative sous l'ouverture de fond du récipient mesureur, la surface de réception comprenant une ouverture pour ouvrir et fermer de manière sélective l'ouverture de fond, la surface de réception étant connectée à l'arbre de commande.

7. Dispositif selon la revendication 1, comprenant, en outre, un premier capteur photoélectrique positionné à proximité du récipient mesureur pour fournir un signal indiquant quand la quantité prédéterminée de l'au moins une garniture a été fournie de l'au moins un récipient à garniture dans le récipient mesureur, la seconde porte ouvrant l'ouverture de fond du récipient mesureur en fonction du signal délivré par le premier capteur photoélectrique.

8. Dispositif selon la revendication 7, comprenant, en outre, un second capteur photoélectrique positionné à proximité d'une partie inférieure du récipient mesureur pour fournir un signal indiquant que la quantité prédéterminée de l'au moins une garniture dans le récipient mesureur a été distribuée.

9. Dispositif selon la revendication 1, dans lequel le mécanisme rotatif (302) peut fonctionner pour faire tourner la croûte par rapport au récipient mesureur, de telle sorte que l'au moins une garniture soit distribuée depuis le récipient mesureur à mesure que la croûte tourne par rapport au récipient mesureur.

10. Dispositif selon la revendication 9, comprenant, en outre, un mécanisme vibrant pour appliquer des vibrations au récipient mesureur lorsque la quantité prédéterminée de l'au moins une garniture est en cours de distribution.

11. Dispositif selon la revendication 10, dans lequel le mécanisme vibrant inclut un marteau adapté pour s'engager dans le récipient mesureur ou une pluralité de bosses positionnées sur le récipient mesureur, qui sont engagées pendant la rotation de la croûte.

12. Dispositif selon la revendication 1, incluant, en outre, une section réfrigérée pour contenir l'au moins un récipient à garniture.

13. Dispositif selon la revendication 1, dans lequel les emballages se présentent initialement sous la forme de cartons plats (510) qui sont empilés, et le mécanisme d'emballage comprend une courroie séparatrice de cartons (580) pouvant fonctionner pour saisir par frottement un emballage sélectionné de la pile de cartons plats et le séparer, et un mécanisme élévateur (560) pouvant fonctionner pour faire descendre la pile de cartons plats une fois que la courroie séparatrice a saisi le carton sélectionné dans la pile de cartons plats et l'a séparé.

14. Dispositif selon la revendication 13, dans lequel le mécanisme d'emballage inclut un mécanisme de pliage de carton (590) pour transformer en le pliant ledit carton plat sélectionné en une boite généralement à trois dimensions présentant un volet avant (530) et une volet arrière (531), et dans lequel ledit mécanisme de pliage inclut un mécanisme de pliage de volet arrière et un mécanisme de pliage de volet avant.

15. Dispositif selon la revendication 1, dans lequel le dispositif est fourni sous la forme d'un distributeur automatique.
